# EUROPÄISCHE PATENTSCHRIFT

(11) **EP 4 168 333 B1**
(45) Veröffentlichungstag und Bekanntmachung des Hinweises auf die Patenterteilung: **28.10.2026**
(21) Anmeldenummer: 21713636.5
(22) Anmeldetag: 18.03.2021
(51) Int. Cl.: B65G 47/08, B65G 47/51, B65G 47/53, B65G 47/71, B65G 54/02

(54) **VERFAHREN UND VORRICHTUNG ZUM PUFFERN VON BEHÄLTERN IN EINER BEHÄLTERABFÜLLANLAGE**
METHOD AND APPARATUS FOR BUFFERING CONTAINERS IN A CONTAINER FILLING PLANT
PROCÉDÉ ET DISPOSITIF DE STOCKAGE TEMPORAIRE DE RÉCIPIENTS DANS UNE INSTALLATION DE REMPLISSAGE DE RÉCIPIENTS

(30) Priorität: 22.06.2020 DE 102020207676
(43) Veröffentlichungstag der Anmeldung: 26.04.2023
(73) Patentinhaber: Krones AG, 93073 Neutraubling (DE)
(72) Erfinder: SENN, Konrad, 93073 Neutraubling (DE); ELSPERGER, Stefan, 93073 Neutraubling (DE); SCHUESSLBURNER, Helmut, 93073 Neutraubling (DE); KILGENSTEIN, Torsten, 93073 Neutraubling (DE)
(74) Vertreter: Grünecker Patent- und Rechtsanwälte PartG mbB
(86) Internationale Anmeldenummer: PCT/EP2021/056918
(87) Internationale Veröffentlichungsnummer: WO 2021/259525

(56) Entgegenhaltungen:
- WO-A1-2016/200751
- WO-A1-2019/228901
- DE-A1- 102012 021 997
- DE-A1- 102018 211 859
- FR-A1- 3 075 768

## Beschreibung

Die Erfindung betrifft ein Verfahren zum Puffern von Behältern in einer Abfüllanlage, gemäß dem Oberbegriff des Anspruchs 1 und eine Vorrichtung zum Puffern von Behältern gemäß dem Oberbegriff des Anspruchs 10.

Ein gattungsgemäßes Verfahren und eine gattungsgemäße Vorrichtung sind aus der DE 10 2018 211 859 A1 bekannt. Demnach können einreihige Behältergruppen, beispielsweise bestehend aus Getränkeflaschen, mittels quer ausgerichteter Reihenschieber ohne Staudruck über eine Pufferfläche geschoben werden. Im Zusammenhang mit einem jeweils quer zur Pufferrichtung ausgerichteten Behältereinlauf und Behälterauslauf ergibt sich so eine Puffervorrichtung, die Behälterströme bei effizienter Platzausnutzung beispielsweise nach dem First-in-first-out-Prinzip puffern kann.

Ferner besteht zur Flexibilisierung von Produktionsabläufen und/oder Produktumstellungen zunehmend Bedarf dafür, bestimmte Behandlungsschritte in Abfüllanlagen wahlweise auch mit unterschiedlichen Behandlungsmaschinen und/oder in unterschiedlichen Inspektionsmaschinen durchführen zu können. Zur wahlweisen Einbindung solcher Maschinen werden dann Weichen verwendet, mit denen der jeweilige Produktstrom auf bestimmte Maschinen verteilt werden kann, oder von unterschiedlichen Maschinen kommend weitergeführt und/oder aus Teilströmen zusammengeführt werden kann. Dies erfordert in der Regel einen erheblichen Platzbedarf und apparativen Aufwand. Zudem müssen gattungsgemäße Puffervorrichtungen gegebenenfalls mehrfach an geeigneter Stellen zwischen Weichen und/oder Verteileinheiten platziert werden, was ebenso den Platzbedarf erhöht und oftmals eine komplizierte Führung der einzelnen Produktströme verursacht.

Es besteht daher der Bedarf für eine Puffervorrichtung der gattungsgemäßen Art, die sich flexibler und/oder mit geringerem Platzbedarf in Abfüllanlagen integrieren lässt.

Die gestellte Aufgabe wird mit einem Verfahren nach Anspruch 1 und mit einer Vorrichtung nach Anspruch 10 gelöst.

Das Verfahren dient demnach zum Puffern von Behältern, insbesondere Flaschen, in einer Abfüllanlage, insbesondere im Wesentlichen ohne gegenseitigen Staudruck der Behälter. Bei dem Verfahren werden die Behälter einreihig gruppiert auf wenigstens einem Einlaufförderband eingespeichert, auf einer quer daran anschließenden Pufferfläche von Schienen geführten und einzelnen angetriebenen Shuttles mit Reihenschiebern in einer zur Einlaufrichtung quer verlaufenden Pufferrichtung unter Beibehaltung einer räumlich voneinander getrennten einreihigen Anordnung, also in räumlich voneinander getrennten Pufferzeilen, verschoben und auf wenigstens einem in Pufferrichtung quer daran anschließenden Auslaufförderband ausgespeichert.

Erfindungsgemäß werden ferner Behälter mittels in die Pufferfläche integrierter Verzweigungsförderbänder quer zur Pufferrichtung und unabhängig vom Einlaufförderband und Auslaufförderband von der Pufferfläche ausgespeichert und/oder auf der Pufferfläche eingespeichert.

Dadurch können die Verzweigungsförderbänder zusätzlich einzelne Behälter oder Behältergruppen (Behälterreihen) im Bereich der Pufferfläche verteilen im Sinne von einem Ausschleusen und/oder Einschleusen quer zur Pufferrichtung, also im Wesentlichen reihenförmig / zeilenförmig.

Das wenigstens eine im Einlaufbereich einmündende Einlaufförderband und wenigstens ein in Pufferrichtung stromabwärts einmündendes Verzweigungsförderband können beispielsweise unterschiedlichen stromaufwärts der Pufferfläche angeordneten Behandlungsmaschinen und/oder Inspektionsmaschinen zugeordnet werden.

Ebenso können das wenigstens eine im Auslaufbereich abgehende Auslaufförderband und wenigstens ein in Pufferrichtung stromaufwärts davon abgehendes Verzweigungsförderband unterschiedlichen stromabwärts der Pufferfläche angeordneten Behandlungsmaschinen und/oder Inspektionsmaschinen zugeordnet werden.

Somit lassen sich unterschiedliche Behälterströme durch Einspeichern und/oder Ausspeichern mittels der Verzweigungsförderbänder gleichzeitig und/oder abwechselnd im Bereich der Pufferfläche transportieren und gegebenenfalls flexibel verteilen / aufteilen. Der Bedarf für zusätzliche Weichen / Verteileinheiten unmittelbar stromaufwärts und/oder stromabwärts der Pufferfläche kann dadurch reduziert und gegebenenfalls sogar eliminiert werden.

Vorzugsweise werden die von wenigstens einem der Verzweigungsförderbänder eingespeicherten Behälter einerseits und die von dem wenigstens einen Einlaufförderband eingespeicherten Behälter andererseits unmittelbar stromaufwärts auf voneinander abweichende Weise, beispielsweise mit unterschiedlich konfigurierten Maschinen, und/oder getrennt voneinander behandelt, inspiziert oder gespeichert.

Darunter ist zu verstehen, dass beispielsweise unmittelbar stromaufwärts des Einlaufförderbands eine bestimmte Behandlung, beispielsweise ein Füllen und Verschließen der Behälter, durchgeführt wird und unmittelbar stromaufwärts eines der Verzweigungsförderbänder eine Inspektion der unmittelbar zuvor gefüllten Behälter, beispielsweise im Sinn einer stichprobenartigen Inspektion einzelner Behälter, oder eine Etikettierung der Behälter durchgeführt wird. Dies ermöglicht eine besonders flexible Kombination und selektive Durchführung unterschiedlicher Behandlungs- und/oder Inspektionsschritte in einer Abfüllanlage.

Vorzugsweise werden die von wenigsten einem der Verzweigungsförderbänder ausgespeicherten Behälter einerseits und die von dem wenigstens einen Auslaufförderband ausgespeicherten Behälter andererseits unmittelbar stromabwärts auf voneinander abweichende Weise, beispielsweise mit unterschiedlich konfigurierten Maschinen, und/oder getrennt voneinander behandelt, inspiziert oder gespeichert.

Beispielsweise könnten die Behälter unmittelbar stromabwärts eines der Verzweigungsförderbänder inspiziert und unmittelbar stromabwärts des Auslaufförderbands verpackt werden. Insbesondere ist es denkbar, Behälter mit einem der Verzweigungsförderbänder einer daran anschließenden Inspektionseinheit zuzuführen und dort als ordnungsgemäß erkannte Behälter über wenigstens ein anderes Verzweigungsförderband wieder zurück auf die Pufferfläche zu führen.

Hierbei wäre es auch möglich, die Transportposition der einzelnen Behälter bezüglich des Produktstroms im Sinne eines First-in-first-out-Prinzips beizubehalten. Zu diesem Zweck könnte beispielsweise der Vorschub der Behälter auf der Pufferfläche (in Pufferrichtung) mit der Verweildauer der Behälter auf den Verzweigungsförderbändern und in der daran angeschlossenen Inspektionseinheit oder Behandlungseinheit synchronisiert werden. Das heißt, über eines der Verzweigungsförderbänder vorübergehend ausgeschleuste Behälter würden wieder in die dabei im Produktstrom auf der Pufferfläche entstandene Lücke mittels eines weiteren Verzweigungsförderbands zurückgeführt.

Vorzugsweise werden die Behälter mittels wenigstens zwei der Verzweigungsförderbänder unmittelbar vor und/oder nach einer Etikettierung, Inspektion oder Pufferung ausgespeichert und wieder eingespeichert. Somit lassen sich einzelne Behandlungsschritte und/oder Inspektionsschritte produktspezifisch und/oder formatspezifisch einbeziehen oder umgehen. Ebenso können zeitaufwändige Offline-Inspektionen für einzelne Behälter eingebunden werden.

Vorzugsweise werden auf der Pufferfläche erste Behälter mit einem ersten Füllgut und/oder eines ersten Behälterformats transportiert und zweite Behälter mit einem zweiten Füllgut und/oder eines zweiten Behälterformats mittels wenigstens eines der Verzweigungsförderbänder aus einer nebengeordneten Puffervorrichtung ausgespeichert und in die Reihenschieber eingespeichert. Dabei werden die ersten und zweiten Behälter als gemischte Abfolge, insbesondere in entweder mit den ersten oder zweiten Behältern beladenen Reihenschiebern, zum Auslaufbereich vorgeschoben und dort insbesondere in entweder den ersten oder den zweiten Behältern zugeordnete Transportgassen geleitet werden.

Vorzugsweise werden bei einem Sortenwechsel / Formatwechsel stromabwärts überschüssige Behälter alter Produktion mittels wenigstens eines der Verzweigungsförderbänder auf einen Restbehälterbahnhof ausgeschleust, insbesondere unter lückenlos aneinander anschließendem Einlauf von Behältern alter und neuer Produktion. Dadurch lassen sich Unterbrechungen des Produktstroms zumindest einlaufseitig vermeiden und gegebenenfalls nötige Umrüstarbeiten an einzelnen Shuttles / im Zulauf während fortgesetzter Produktion durchführen.

Vorzugsweise werden beim Ausspeichern an wenigstens einem der Verzweigungsförderbänder entleerte Shuttles mittels einer zuschaltbaren Vertikalweiche von der Pufferfläche weggefahren / abgehoben und anschließend zwischengespeichert. Dadurch lässt sich vermeiden, dass nicht mit Behältern beladene Shuttles einen Teil der Pufferfläche beanspruchen und so die Speicherkapazität der Pufferfläche reduzieren. Ferner lässt sich vermeiden, das nicht beladene Shuttles, synonym der Verständlichkeit halber auch Leershuttles genannt, den Ablauf beim Ausspeichern der Behälter im Auslaufbereich, also auf das wenigstens eine Auslaufförderband, behindern.

Die mit Behältern beladenen Shuttles werden hierbei insbesondere in einer von der Pufferfläche vorgegebenen unteren Ebene / Etage in Pufferrichtung bewegt und die Leershuttles in einer darüber liegenden oberen Ebene / Etage entgegen der Pufferrichtung wieder zurückbewegt.

Zu diesem Zweck werden die Leershuttles vorzugsweise entlang vertikal gekrümmter Kurvensegmente gefahren und/oder um horizontale Achsen geschwenkt, so dass die Leershuttles in der oberen Ebene kopfüber zurücklaufen.

Vorzugsweise werden beim Einspeichern an wenigstens einem der Verzweigungsförderbänder mit Behältern zu beladene Leershuttles mittels einer zuschaltbaren Vertikalweiche nach Zwischenspeicherung der Leershuttles auf die Pufferfläche gefahren / abgesenkt. Somit können Leershuttles in Lücken zwischen beladenen Shuttles oder im Anschluss an beladene Shuttles auf der Pufferfläche platziert werden, um die Leershuttles anschließend mittels der Verzweigungsförderbänder mit Behältern zu beladen, in den Produktstrom beladener Shuttles einzureihen und beispielsweise in Pufferrichtung zum wenigstens einen Auslaufförderband vorzuschieben.

Die Leershuttles werden dann vorzugsweise kopfüber in der oberen Ebene zur Vertikalweiche gefahren und dort entlang vertikal gekrümmter Kurvensegmente auf die Pufferfläche heruntergefahren und/oder auf diese um eine horizontale Achse geschwenkt. Dadurch lässt sich vermeiden, dass Leershuttles bereits im Einlaufbereich in den Produktstrom eingegliedert werden müssen und dadurch zum einen Pufferfläche beanspruchen und zum anderen den Ablauf beim Einspeichern der Behälter am Einlaufförderband stören können.

Die Vertikalweichen umfassen insbesondere horizontal schwenkbare Schienensegmente und/oder quer zur Pufferrichtung verschiebbare Schienensegmente. Durch Einbindung derartiger Schienensegmente, beispielsweise Kurvensegmente und Geradsegmente, kann ein Rückführkreislauf für Leershuttles an unterschiedlichen Längsabschnitten der Pufferfläche bei Bedarf gezielt geschlossen werden, beispielsweise um Leershuttles von der Pufferfläche zu entfernen und/oder auf dieser zu platzieren.

Vorzugsweise nehmen die Reihenschieber die einreihigen Behältergruppen (Behälterreihen) jeweils zweiseitig zwischen in Pufferrichtung vorauslaufenden vorderen und diesbezüglich nachlaufenden hinteren Reihenführungen auf. Die Reihenschieber fassen dann quer zur Pufferrichtung verlaufende Führungskanäle für die Behälter / Behältergruppen, die jeweils von den vorderen und hinteren Reihenführungen begrenzt werden. Dadurch können die Behälter sowohl beim Beschleunigen und Verschieben der Behälter in Pufferrichtung als auch beim Abbremsen der Behälter auf der Pufferfläche vergleichsweise schnell, präzise und gegen Umfallen weitgehend gesichert bewegt werden.

Die beschriebene Vorrichtung dient zum staudrucklosen Puffern einreihig gruppierter Behälter, insbesondere Flaschen, in einer Abfüllanlage, und umfasst einen Einlaufbereich, einen Auslaufbereich, eine Pufferfläche und ein über der Pufferfläche angeordnetes Transportsystem zum Verschieben der Behälter auf der Pufferfläche in einer Pufferrichtung vom Einlaufbereich, der wenigstens ein quer zur Pufferrichtung verlaufendes Einlaufförderband aufweist, in einen Auslaufbereich, der wenigstens ein quer zur Pufferrichtung verlaufendes Auslaufförderband aufweist. Das Transportsystem umfasst an Schienen geführte und unabhängig voneinander angetriebene Shuttles mit quer zur Pufferrichtung ausgerichteten Reihenschiebern zum einreihig gruppierten Verschieben der Behälter, also unter Beibehalten einer räumlichen Trennung der einreihigen Gruppen voneinander.

Erfindungsgemäß umfasst die Vorrichtung ferner in die Pufferfläche integrierte Verzweigungsförderbänder, die quer zur Pufferrichtung verlaufen und unabhängig vom Einlaufförderband und Auslaufförderband angetrieben sind, um Behälter aus von der Pufferfläche einreihig auszuspeichern und/oder einreihig auf dieser einzuspeichern.

Damit lassen sich die bezüglich des Anspruchs 1 beschriebenen Vorteile erzielen.

Vorzugsweise umfasst das Transportsystem ferner, insbesondere jeweils über der Pufferfläche angeordnet, einen Leershuttle-Puffer und eine zuschaltbare Vertikalweiche, mit der beim Ausspeichern an wenigstens einem der Verzweigungsförderbänder entleerte Shuttles zur Zwischenspeicherung von der Pufferfläche in den Leershuttle-Puffer geleitet werden können.

Der Leershuttle-Puffer ist dann vorzugsweise in der voranstehend beschriebenen oberen Ebene / Etage angeordnet. Die zuschaltbare Vertikalweiche umfasst dann vorzugsweise vertikal verlaufende Kurvensegmente als Bestandteil der Schienen und/oder um horizontale Achsen schwenkbare Schwenkmechanismen für die Shuttles, um diese von der unteren Ebene / Etage der Pufferfläche auf die obere Ebene / Etage zu führen und somit an den Leershuttle-Puffer anzuschließen.

Vorzugsweise umfasst das Transportsystem ferner, insbesondere jeweils über der Pufferfläche angeordnet, einen Leershuttle-Puffer und eine zuschaltbare Vertikalweiche, mit der beim Einspeichern an wenigstens einem der Verzweigungsförderbänder mit Behältern zu beladene Shuttles aus dem Leershuttle-Puffer auf die Pufferfläche geleitet werden können.

Auch in diesem Fall ist der Leershuttle-Puffer vorzugsweise in der zuvor beschriebenen oberen Ebene / Etage über der unteren Ebene / Etage der Pufferfläche angeordnet und wird mittels entsprechend gekrümmte Kurvenabschnitte umfassende und/oder Schwenkmechanismen umfassende Vertikalweichen an die Pufferfläche angebunden.

Durch wahlweise Verbindung der unteren und oberen Ebene / Etage mittels zuschaltbarer Vertikalweichen können in Pufferrichtung flexibel versetzbare Umlaufbahnen für die Shuttles unter Einbeziehung der Pufferfläche und des Leershuttle-Puffers gebildet werden.

Vorzugsweise umfasst die Vorrichtung ferner ein Umgehungsförderband, das mittels einer Horizontalweiche vom Anfang / Eingang des Einlaufförderbands abzweigt und eine Verbindung zum wenigstens anteiligen Transport der Behälter zum Anfang / Eingang des Auslaufförderbands herstellt. Das Umgehungsförderband verläuft dann vorzugsweise im Wesentlichen in derselben Ebene wie die Pufferfläche, also seitlich neben der Pufferfläche und/oder um diese herum.

Dadurch wäre es beispielsweise möglich, bei einer Störung im Bereich der Pufferfläche den Anlagenbetrieb bzw. den Produktstrom aufrechtzuerhalten oder lediglich für den Produktionsablauf überschüssige Behälter oder eine gewisse Pufferreserve an Behältern auf die Pufferfläche zu leiten und dort zu puffern. Dadurch ließe sich die Auslastung und der Verschleiß der Vorrichtung insgesamt reduzieren.

Vorzugsweise umfassen die Reihenschieber zur zweiseitig einreihigen Führung der Behälter jeweils eine diesen in Pufferrichtung vorauslaufende vordere Reihenführung und eine den Behältern jeweils nachlaufende hintere Reihenführung. Die vordere und die hintere Reihenführung begrenzen dann jeweils einen quer zur Pufferrichtung ausgerichteten Führungskanal für die Behälter. Somit werden die Behälter sowohl beim Beschleunigen und Voranschieben in Pufferrichtung als auch beim diesbezüglichen Abbremsen zuverlässig gegen Umfallen in den Führungskanälen / Reihenschiebern geführt.

Vorzugsweise sind die Reihenschieber / Führungskanäle jeweils paarweise an den Shuttles angeordnet. Dies ermöglicht eine besonders effektive Ausnutzung der Pufferfläche durch im Wesentlichen lückenloses Nachrücken der Shuttles und gleichzeitig eine Reduzierung des apparativen Aufwands für die Antriebe der Shuttles / Reihenschieber.

Die beschriebene Vorrichtung ist vorzugsweise Bestandteil einer Behälterbehandlungsanlage, beispielsweise einer Abfüllanlage oder Kommissionierungsanlage, die ferner eine an wenigstens zwei der Verzweigungsförderbänder angeschlossene Etikettiermaschine, Inspektionsmaschine und/oder weitere Puffervorrichtung für die mittels der Verzweigungsförderbänder ausgespeicherten und eingespeicherten Behälter umfasst. Dadurch lassen sich besonders platzsparende und flexibel an unterschiedliche Produktionsbedingungen anpassbare Abfüllanlagen bereitstellen.

Vorzugsweise umfasst die Behälterbehandlungsanlage, beispielsweise Abfüllanlage oder Kommissionierungsanlage dann ferner eine dem Einlaufförderband vorgeschaltete Behandlungsmaschine für die Behälter, wobei die Behandlungsmaschine eine Blasmaschine, Füll-/ Verschließmaschine oder Etikettiermaschine ist, und eine dem Auslaufförderband nachgeschaltete Verpackungsmaschine und/oder Speichereinheit für die Behälter. Dadurch lässt sich die beschriebene Vorrichtung als zentrales Bindeglied zum Puffern und Verteilen von Behältern zwischen einer stromaufwärts durchgeführten Herstellung und/oder Behandlung der Behälter und einer stromabwärts durchgeführten Zwischenspeicherung, Verpackung und/oder Kommissionierung einsetzen. Somit ist ein besonders platzsparender und flexibler Produktionsbetrieb in der Abfüllanlage gegeben.

Die beschriebene Vorrichtung ist vorzugsweise Bestandteil einer Behälterbehandlungsanlage, beispielsweise einer Abfüllanlage oder Kommissionierungsanlage, mit einem an wenigstens einem der Verzweigungsförderbänder angeschlossenen und/oder von den Verzweigungsförderbändern gebildeten Restbehälterbahnhof zur Aufnahme stromabwärts der Vorrichtung überschüssiger Behälter. Diese können bei einem Sortenwechsel / Formatwechsel beispielsweise aus einem nicht sortenrein beladenen Reihenschieber gezielt ausgespeichert werden, um einlaufseitig einen im Wesentlichen ununterbrochenen Behälterstrom aufrechtzuerhalten und somit Produktionsunterbrechungen zu vermeiden.

Bevorzugte Ausführungsformen der Erfindung sind zeichnerisch dargestellt. Es zeigen:
- Figur 1: eine schematische Draufsicht auf die Pufferfläche der Vorrichtung mit der unteren Ebene / Etage des Transportsystems;
- Figur 2: eine schematische seitliche Ansicht der Vorrichtung;
- Figur 3: eine seitliche Ansicht einer in das Transportsystem integrierten Vertikalweiche für Leershuttles;
- Figur 4A - 4D: eine Draufsicht auf die Vertikalweiche in unterschiedlichen Stellungen;
- Figur 5: eine schematische Draufsicht auf eine erste Einbindung der Vorrichtung in eine Abfüllanlage;
- Figur 6: eine schematische Draufsicht auf eine zweite Einbindung der Vorrichtung in eine Abfüllanlage;
- Figur 7: eine schematische Draufsicht auf eine dritte Einbindung der Vorrichtung in eine Abfüllanlage;
- Figur 8: eine schematische Draufsicht auf eine vierte Einbindung der Vorrichtung in eine Abfüllanlage;
- Figur 9: eine schematische Draufsicht auf eine fünfte Einbindung der Vorrichtung in eine Abfüllanlage; und
- Figur 10: eine schematische Draufsicht auf eine sechste Einbindung der Vorrichtung in eine Abfüllanlage.

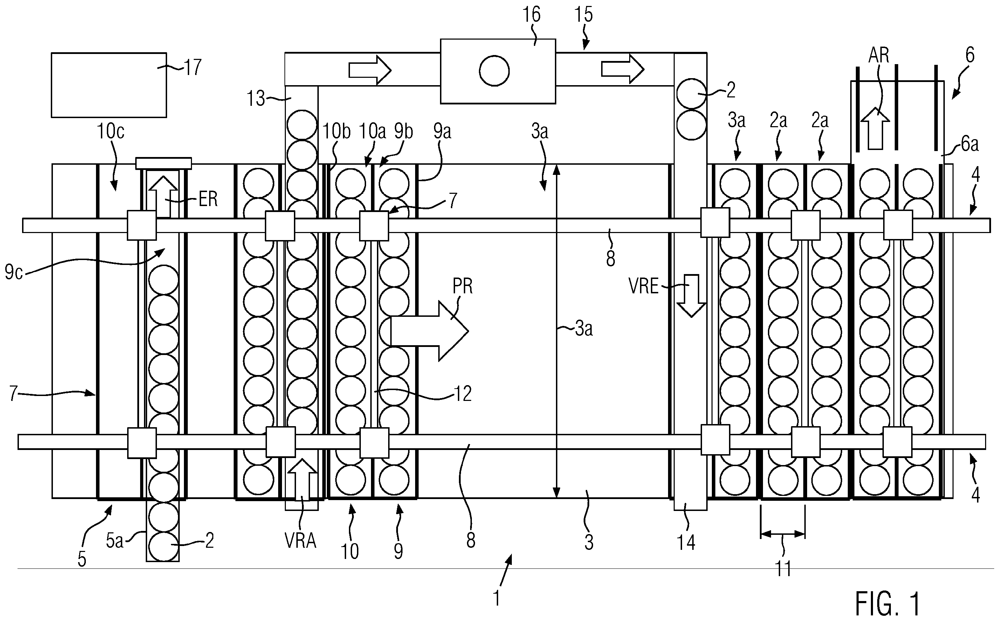

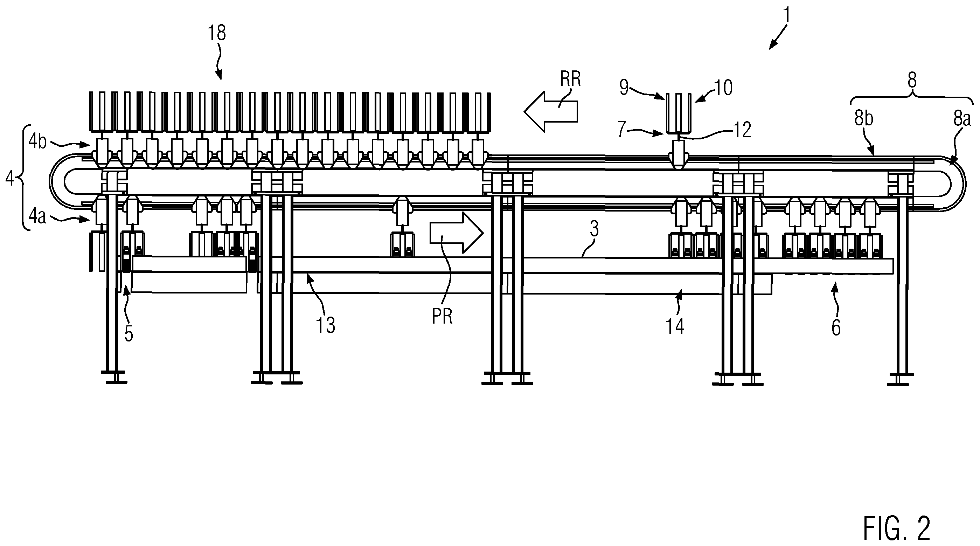

Wie die Figuren 1 und 2 erkennen lassen, umfasst die Vorrichtung 1 zum Puffern von Behältern 2 unter Beibehaltung einer räumlichen Trennung zwischen einreihigen Behältergruppen 2a eine im Wesentlichen horizontale Pufferfläche 3 und ein darüber angeordnetes Transportsystem 4 zum Verschieben der Behälter 2 / Behältergruppen (Behälterreihen) 2a auf der Pufferfläche 3 in einer Pufferrichtung PR. Dies kann auch als ein Verschieben räumlich getrennter Pufferzeilen für die Behälter 2 verstanden werden. Bei den Behältern 2 handelt es sich beispielsweise um Flaschen.

Die Vorrichtung 1 umfasst ferner einen Einlaufbereich 5 mit wenigstens einem Einlaufförderband 5a und einen Auslaufbereich 6 mit wenigstens einem Auslaufförderband 6a. Der Einlaufbereich 5, die Pufferfläche 3 und der Auslaufbereich 6 bilden einen im Wesentlichen ebenen Überschubbereich für die Behälter 2 / Behältergruppen (Behälterreihen) 2a.

Das wenigstens eine Einlaufförderband 5a verläuft in einer Einlaufrichtung ER und das Auslaufförderband 6a in einer Auslaufrichtung AR jeweils quer und insbesondere orthogonal zur Pufferrichtung PR des Transportsystems 4.

Es können mehrere Auslaufförderbänder 6a in Pufferrichtung PR nebeneinander angeordnet und jeweils einer in Auslaufrichtung AR anschließenden Transportgasse 6b zugeordnet sein.

Das Transportsystem 4 umfasst unabhängig voneinander angetriebene Shuttles 7 und als geschlossene Umlaufbahn ausgebildete Schienen 8, an denen die Shuttles 7 entlanglaufen.

Die Shuttles 7 umfassen vorzugsweise wenigstens einen (in Pufferrichtung PR gesehen) vorderen Reihenschieber 9 und einen diesbezüglich hinteren Reihenschieber 10. Die Shuttles 7 könnten aber auch jeweils nur einen der Reihenschieber 9, 10 umfassen.

Die in Pufferrichtung PR hintereinander am jeweiligen Shuttle 7 angeordneten Reihenschieber 9, 10 können auch als Zwillings-Reihenschieber angesehen werden. Jeder Reihenschieber 9, 10 ist zur einreihigen Aufnahme der Behälter 2 / Behältergruppen 2a ausgebildet und quer, insbesondere orthogonal, zur Pufferrichtung PR ausgerichtet.

Die jeweils einreihige Aufnahme der Behälter 2 / Behältergruppen 2a in den Reihenschiebern 9, 10 ermöglicht einen staudrucklosen Vorschub in Pufferrichtung PR, also im Wesentlichen ohne gegenseitigen Staudruck zwischen den in Pufferrichtung PR benachbarten und dabei stets räumlich voneinander getrennten Behältergruppen 2a.

Die Reihenschieber 9, 10 sind zur jeweils vorauslaufenden und nachlaufenden Führung der einreihig gruppierten Behälter 2 und somit zu deren Führung sowohl in Pufferrichtung PR, also bei deren Vorschub in Pufferrichtung PR, beispielsweise bei Beschleunigung des Vorschubs, als auch entgegen der Pufferrichtung PR, insbesondere beim Abbremsen des Vorschubs, ausgebildet.

Die Reihenschieber 9, 10 umfassen zu diesem Zweck jeweils eine den Behältern 2 vorauslaufende vordere Reihenführung 9a, 10a und eine den Behältern 2 nachlaufende hintere Reihenführung 9b, 10b sowie von diesen jeweils begrenzte Führungskanäle 9c, 10c zur Aufnahme und zweiseitigen Führung der Behälter 2 / einzelnen Behältergruppen (Behälterreihen) 2a.

Die Reihenschieber 9, 10 bzw. deren Führungskanäle 9c, 10c weisen eine jeweils zwischen vorderer Reihenführung 9a, 10a und hinterer Reihenführung 9b, 10b definierte lichte Weite 11 auf, die vorzugsweise an die jeweilige Behälterbreite / den jeweiligen Behälterdurchmesser angepasst werden kann, beispielsweise mittels eines lediglich schematisch angedeuteten Stellmechanismus 12.

Der Stellmechanismus 12 kann beispielsweise mittels einer im Bereich des Transportsystems 4 angeordneten stationären Einstellstation (nicht dargestellt) oder auch manuell betätigt werden. Zur Betätigung des Stellmechanismus 12 können die nicht beladenen Shuttles 7 / Leershuttles beim Zurücklaufen vorübergehend angehalten werden.

Die Reihenschieber 9, 10 erstrecken sich vorzugsweise im Wesentlichen über die gesamte Breite 3a der Pufferfläche 3 und weisen vorzugsweise eine Breite (quer zur Pufferrichtung PR) von 3 bis 6 m auf, insbesondere von 4 bis 5,5 m.

Das Transportsystem 4 umfasst eine untere Ebene 4a, in der die Shuttles 7 mit nach unten weisenden Reihenschiebern 9, 10 über die Pufferfläche 3 in Pufferrichtung PR geführt werden, sowie eine obere Ebene 4b, in der die leeren Shuttles 7, also in nicht beladenem Zustand, mit nach oben weisenden Reihenschiebern 9, 10, also kopfüber, in einer der Pufferrichtung PR entgegengesetzten Rückführrichtung RR an den Schienen 8 entlanglaufen.

Die Schienen 8 umfassen vertikal gekrümmte Kurvensegmente 8a, die vorzugsweise als Klothoide ausgebildet sind, sowie Geradsegmente 8b.

Wie die Figur 1 ferner erkennen lässt, sind in die Pufferfläche 3 Verzweigungsförderbänder 13, 14 integriert, die wie das wenigstens eine Einlaufförderband 5a / Auslaufförderband 6a quer und insbesondere orthogonal zur Pufferrichtung PR angeordnet und separat von diesen angetrieben sind, und zwar gegebenenfalls in einer Verzweigungsrichtung VRA zum Ausspeichern von Behältern aus der Pufferfläche 3 und einer (in der Fig. 2 beispielhaft entgegengesetzten) Verzweigungsrichtung VRE zum Einspeichern von Behälter 2 auf der Pufferfläche 3.

Die Verzweigungsförderbänder 13, 14 dienen somit im Wesentlichen zum reihenweisen (zeilenweisen) Einspeichern oder Ausspeichern einer beliebigen Anzahl der in den jeweiligen Reihenschiebern 9 ,10 zu puffernden bzw. bereits gepufferten Behälter 2.

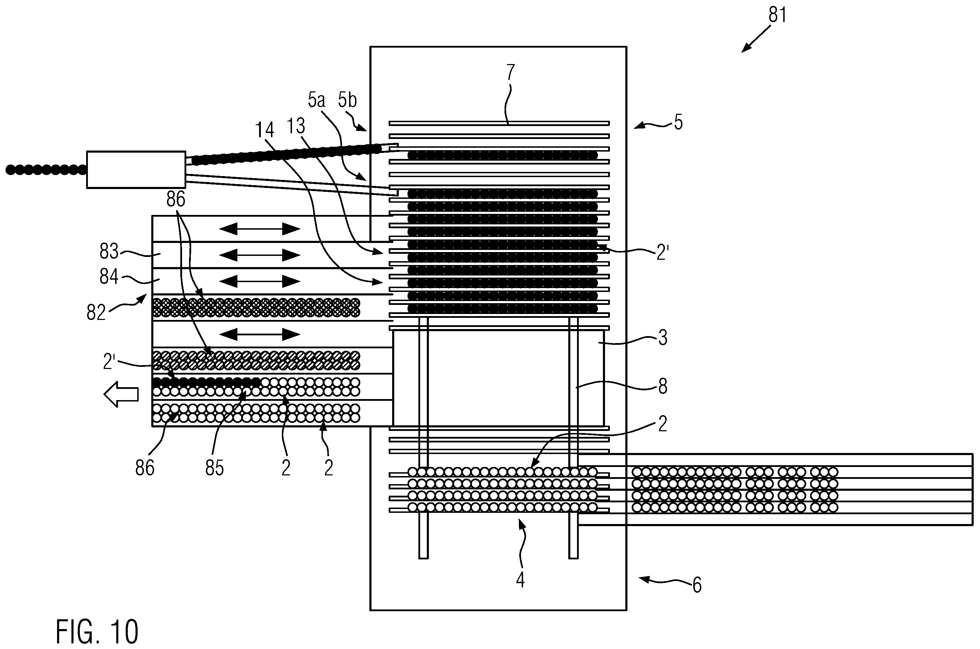

Prinzipiell könnten die Verzweigungsförderbänder 13, 14 auch bidirektional angetrieben sein, also mit umkehrbarer Verzweigungsrichtung VRA / VRE zum wahlweisen Ausspeichern oder Einspeichern von Behältern 2 / Behälterreihen 2a, wie beispielsweise noch bezüglich der Figur 10 ausführlich beschrieben wird.

Beispielhaft dargestellt ist in der Figur 1 ein (in Pufferrichtung PR gesehen) hinteres Verzweigungsförderband 13 zum Ausspeichern von Behältern 2 aus der Pufferfläche 3 und ein (in Pufferrichtung PR gesehen) vorderes Verzweigungsförderband 14 zum Einspeichern von Behältern 2 auf die Pufferfläche 3.

Das hintere Verzweigungsförderband 13 kann beispielsweise in Auslaufrichtung AR angetrieben sein und das vordere Verzweigungsförderband 14 dem entgegengesetzt, so dass sich beispielsweise mit einem dazwischen geschalteten Verbindungsförderband eine Umgehungsstrecke 15 um einen Teilbereich der Pufferfläche 3 ausbilden lässt. In die Umgehungsstrecke 15 kann beispielsweise eine Einheit 16 zur Behandlung und/oder Inspektion bestimmter Behälter 2 eingebunden sein.

Die Verzweigungsförderbänder 13, 14 sind unabhängig von dem wenigstens einen Einlaufförderband 5a und dem wenigstens einen Auslaufförderband 6a angetrieben und können beispielsweise mittels einer (schematisch angedeuteten) Steuerung 17 der Vorrichtung 1 gezielt zum Ausspeichern / Einspeichern von Behältern 2 angetrieben oder angehalten werden.

Die Vorrichtung 1 wird vorzugsweise so betrieben, dass die Shuttles 7 für das Einspeichern und Ausspeichern der Behälter 2 über dem jeweils dafür vorgesehenen Einlaufförderband 5a, Auslaufförderband 6a oder Verzweigungsförderband 13, 14 im Wesentlichen stillstehen, so dass die Behälter 2 bei ruhendem Reihenschieber 9, 10 in den jeweiligen Führungskanal 9c, 10c einlaufen bzw. aus dem jeweiligen Führungskanal 9c, 10c auslaufen können.

Vor und nach dem Einspeichern / Ausspeichern der Behälter 2 können die Shuttles 7 aufgrund ihrer individuellen Antriebe unabhängig voneinander und mit jeweils geeigneter Geschwindigkeit durch nicht beladene Pufferbereiche 3a der Pufferfläche 3 bewegt werden und/oder schrittweise in beladenen Pufferbereichen 3b der Pufferfläche 3 nachrücken.

Die Shuttles 7 sind zu diesem Zweck beispielsweise über einen Linearmotorantrieb oder kuppelbare Transportketten (jeweils nicht dargestellt) angetrieben, so dass die einzelnen Shuttles 7 mit jeweils geeignet angepassten Geschwindigkeiten durch die einzelnen Bereiche der unteren Ebene 4a und der oberen Ebene 4b des Transportsystems 4 bewegt werden können.

Anders gesagt können die einzelnen Shuttles 7 an prinzipiell beliebigen Stellen der von den Schienen 8 definierten Umlaufbahn bewegt und dort positioniert werden und hierfür jeweils unabhängig voneinander beschleunigt und abgebremst werden. Zum einen können dadurch Abstände zwischen einzelnen Shuttles 7 verändert werden, beispielsweise beim Überfahren nicht beladener Pufferbereiche 3a, zum anderen kann eine Abfolge mehrerer Shuttles mit konstantem Abstand zueinander bewegt werden, insbesondere beim Nachrücken der Shuttles 7 im beladenen Pufferbereich 3b zum Auslaufbereich 6 hin.

Die Shuttles 7 können als Läufer von Linearmotoren ausgebildet sein, deren aktive Komponenten vorzugsweise an den Schienen 8 angeordnet sind, und sind dann beispielsweise mit zugehörigen Permanentmagneten ausgestattet. Diese wirken dann bekanntermaßen mit Langstatoren als individuelle Antriebe für die einzelnen Shuttles 7 zusammen.

Es sind aber auch andere Antriebe denkbar, beispielsweise an den Shuttles 7 ausgebildete Servomotoren (nicht dargestellt) mit Antriebsritzeln, die an einem entlang der Schienen 8 ausgebildeten Zahnkranz (nicht dargestellt) entlanglaufen können. Die Shuttles 7 umfassen dann beispielsweise mit den Schienen 8 zusammenwirkende Führungsrollen oder dergleichen.

Zu diesem Zweck kann Antriebsenergie auch berührungslos, also ohne Schleifleitungen, an die Servomotoren oder dergleichen Antriebe der Shuttles 7 übertragen werden.

Die Shuttles können zudem Energiespeicher für ihre individuellen Antriebe aufweisen, wie beispielsweise Leistungskondensatoren, Batterien oder dergleichen. Dadurch lassen sich Spitzen der Leistungsaufnahme beispielsweise beim Beschleunigen der Shuttles 7 kompensieren oder eine Energieversorgung in Abschnitten der Schienen aufrechterhalten, in denen keine permanente Energieeinspeisung aus einer stationären Energiequelle möglich ist.

Zur Steuerung der einzelnen Shuttles 7 ist beispielsweise eine Datenübertragung mittels Leck-Wellenleiter und/oder funkgestützt möglich, beispielsweise über W-LAN.

Derartige Antriebskonzepte und Steuerungskonzepte für die Shuttles 7 sind prinzipiell bekannt und daher nicht weiter im Detail erläutert.

Wie die Figur 2 ferner erkennen lässt, umfasst das Transportsystem 4 in seiner oberen Ebene 4b einen Leershuttle-Puffer 18, in dem nicht beladene Shuttles 7 auf ein Einspeichern von Behältern 2 in der unteren Ebene 4a des Transportsystem 4 warten.

In der Figur 2 erstreckt sich der Leershuttle-Puffer 18 insgesamt zwischen einlaufseitigen und auslaufseitigen Kurvensegmenten 8a der Schienen 8. Die Kurvensegmente 8a sind unbeweglich und (in Pufferrichtung PR gesehen) jeweils außerhalb des Einlaufbereichs 5 und des Auslaufbereichs 6 angeordnet. Somit durchlaufen dann alle Shuttles 7 in der unteren Ebene 4a zwangsläufig den Einlaufbereich 5, die Pufferfläche 3 und den Auslaufbereich 6.

Das heißt, bei der in der Figur 2 dargestellten Konfiguration werden am hinteren Verzweigungsförderband 13 vollständig entleerte Shuttles 7 weiter in Pufferrichtung PR über die Pufferfläche 3 bewegt und könnten dann beispielsweise am vorderen Verzweigungsförderband 14 wieder mit Behältern 2 bestückt werden. Ebenso wäre es denkbar, nur einzelne Behälter 2 aus den Shuttles 7 an den Verzweigungsförderbändern 13, 14 aus- und/oder einzuspeichern.

Es ist aber auch denkbar, dass am hinteren Verzweigungsförderband 13 entleerte Shuttles 7 im Bereich der Pufferfläche 3 nicht wieder beladen werden sollen, so dass die leeren Shuttles 7 dann im Anschluss und/oder zwischen beladenen Shuttles 7 bis zum Auslaufbereich 6 fahren müssen. Dies verbraucht zum einen Pufferfläche 3 und kann zum anderen den Ablauf beim Ausspeichern der Behälter 2 im Auslaufbereich 6 behindern.

Ebenso könnte es erforderlich sein, beispielsweise am vorderen Verzweigungsförderband 14 Behälter 2 auf die Pufferfläche 3 einzuspeichern, obwohl dafür gerade kein leeres oder ausreichend aufnahmefähiges Shuttle 7 auf der Pufferfläche 3 zur Verfügung steht. In diesem Fall müsste man warten, bis ein leeres / ausreichend aufnahmefähiges Shuttle 7 durch den Einlaufbereich 5 bis an das vordere Verzweigungsförderband 14 gefahren ist. Auch dafür wird wiederum Pufferfläche 3 benötigt. Ferner könnte dadurch der Ablauf beim Einspeichern von Behältern 2 im Einlaufbereich 5 behindert werden.

Aus diesem Grund kann es vorteilhaft sein, über der Pufferfläche 3 wenigstens eine Vertikalweiche 19 anzuordnen, die die untere Ebene 4a des Transportsystems 4 mit der oberer Ebene 4b zwischen dem Einlaufbereich 5 und dem Auslaufbereich 6 wahlweise verbinden kann.

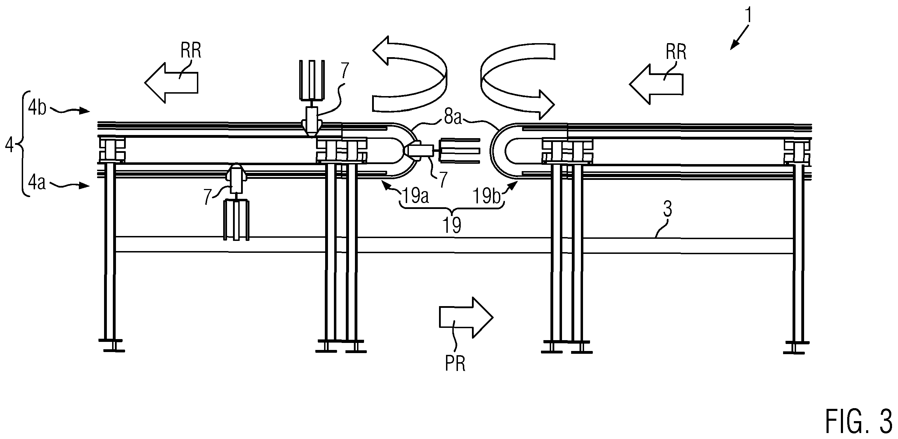

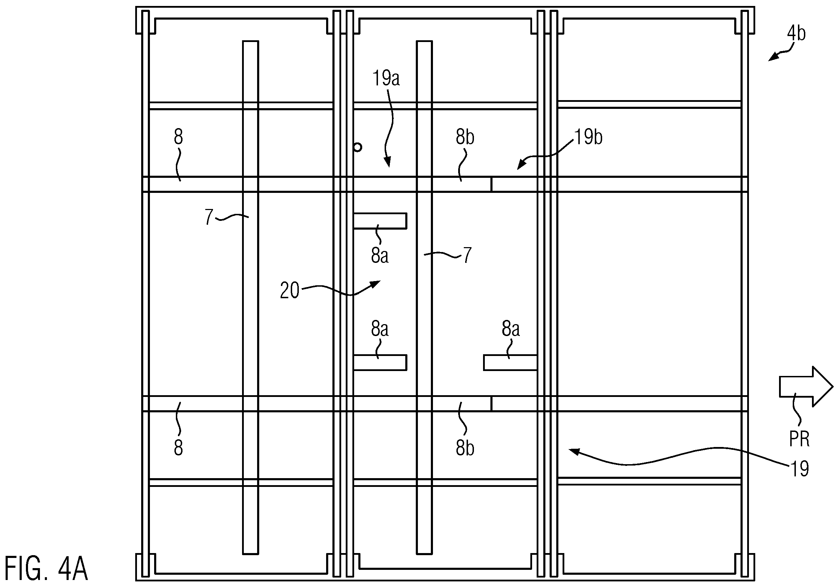

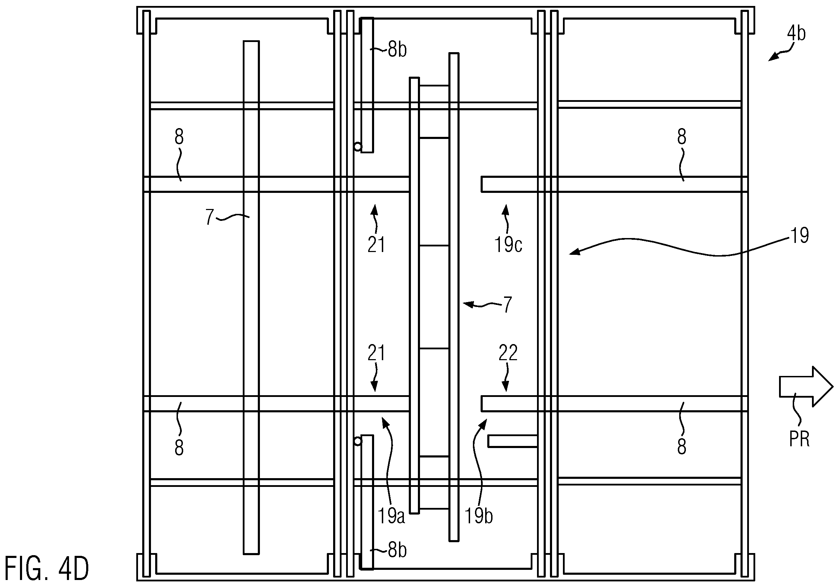

Eine derartige Vertikalweiche 19 ist beispielhaft in der Figur 3 und in den Figuren 4A - 4D dargestellt, wobei die Figur 4D denselben Zustand zeigt wie die Fig. 3.

Gemäß Figur 3 umfasst die Vertikalweiche 19 einen Ausleitabschnitt 19a, mit dem leere Shuttles 7 von der unteren Ebene 4a in die obere Ebene 4b und damit zum Leershuttle-Puffer 18 ausgeleitet werden können, sowie einen Einleitabschnitt 19b, mit dem leere Shuttles 7 aus der oberen Ebene 4b des Transportsystems 4, also aus dem Leershuttle-Puffer 18, in die untere Ebene 4a und somit in den Bereich der Pufferfläche 3 eingeleitet werden können.

Zu diesem Zweck umfasst die Vertikalweiche 19 vorzugsweise bewegliche Kurvensegmente 8a, die anstelle von beweglichen Geradsegmenten 8b in die Schienen 8 eingesetzt werden können. Die beweglichen Geradsegmente 8b können beispielsweise horizontal und quer zur Pufferrichtung PR verschoben und geschwenkt werden und so aus der aus der Schiene 8 herausgelöst werden. Anstelle der beweglichen Geradsegmente 8b werden dann bewegliche Kurvensegmente 8a in die Kurve 8 eingeschoben. Dies ist in den Figuren 4A bis 4D beispielhaft in einer Draufsicht auf die obere Ebene 4b des Transportsystems 4 dargestellt.

Die Figur 4A zeigt eine inaktive Stellung 20 der Vertikalweiche 19, in dem ihre beweglichen Geradsegmente 8b sowohl in der unteren Ebene 4a als auch in der oberen Ebene 4b in die Schienen 8 integriert sind, so dass in der unteren Ebene 4a laufende Shuttles 7 die Vertikalweiche 19 von deren eingangsseitigem Ausleitabschnitt 19a bis zu deren ausgangsseitigem Einleitabschnitt 19b ohne Beeinträchtigung passieren und somit in der unteren Ebene 4a weiterlaufen.

Lediglich zur Veranschaulichung ist in der Figur 4A angedeutet, dass die Vertikalweiche 19 nicht zwangsläufig einen Ausleitabschnitt 19a und einen Einleitabschnitt 19b umfassen muss. Das heißt, die Vertikalweiche 19 könnte nur als Ausleitweiche für leere Shuttles 7, nur als Einleitweiche für leere Shuttles 7 oder als Kombiweiche zum abwechselnden Einleiten oder Ausleiten leerer Shuttles 7 ausgebildet sein.

In der Figur4A ist die Vertikalweiche 19 an der (in Pufferrichtung PR gesehen) rechten Schiene 8 (in der Figur 4A unten) demnach als Kombiweiche dargestellt und an der (in Pufferrichtung PR gesehen) linken Schiene (in der Figur 4A oben) lediglich als Ausleitweiche. Folglich umfasst die dargestellte Vertikalweiche 19 an der rechten Schiene 8 zwei quer zur Pufferrichtung PR versetzte bewegliche Kurvensegmente 8a, nämlich eines zum Ausleiten und eines zum Einleiten leerer Shuttles 7, die linke Schiene 8 dagegen nur ein einzelnes bewegliches Kurvensegment 8a, nämlich zum Ausleiten leerer Shuttles 7.

In der Praxis sind die beweglichen Schienensegmente der Vertikalweiche 19 dagegen an allen Schienen 8 jeweils gleichartig ausgebildet sind, also entweder als Kombiweiche, nur als Ausleitweiche oder nur als Einleitweiche.

In der Figur 4A sind die beweglichen Kurvensegmente 8a jeweils in einer inaktiven Wartestellung angeordnet, die quer zur Pufferrichtung PR bezüglich der Schienen 8 versetzt ist.

In der Figur 4A sind die beweglichen Geradsegmente 8b in die von den Schienen 8 gebildete Umlaufbahn für die Shuttles 7 integriert, so dass sich die Vertikalweiche 19 in einer inaktiven Stellung 20 befindet, in der sie keine Verbindung zwischen den Ebenen 4a, 4b herstellt.

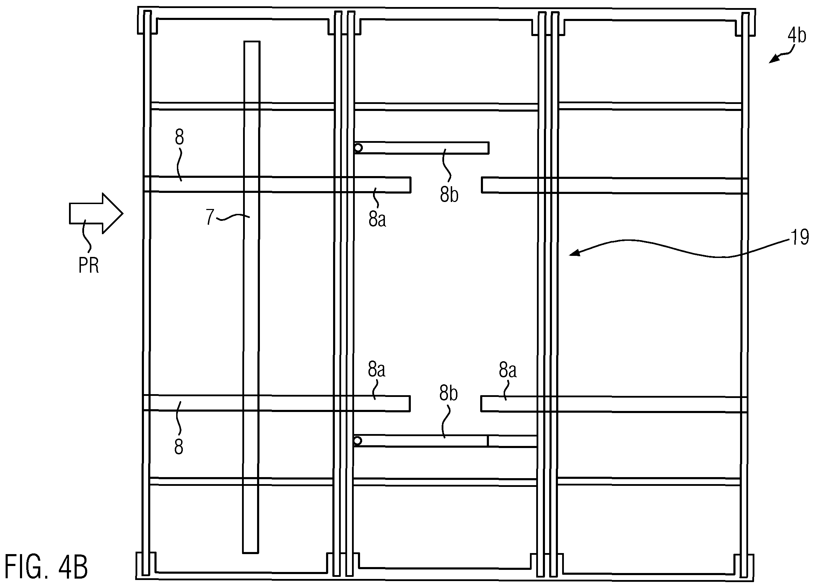

Die Figur 4B zeigt einen Zustand beim Umschalten der Vertikalweiche 19 aus der inaktiven Stellung 20 in eine Ausleitstellung 21 sowie in eine Einleitstellung 22 (jeweils Figur 4D). Zu diesem Zweck werden die beweglichen Geradsegmente 8b quer zur Pufferrichtung PR vorzugsweise nach außen hin verschoben und die beweglichen Kurvensegmente 8a an deren Stelle von innen her bis zum bündigen Anschluss an die Schienen 8 herangeschoben.

Dies erfolgt je nach Ausbildung der Vertikalweiche 19 sowohl einlaufseitig als auch auslaufseitig, nur einlaufseitig oder nur auslaufseitig.

In dem in der Figur 4B dargestellten Zustand ist das Transportsystem 4 bereits in eine Umlaufbahn für die Shuttles 7 stromaufwärts (in Pufferrichtung PR) der Vertikalweiche 19 und eine Umlaufbahn stromabwärts der Vertikalweiche 19 unterteilt.

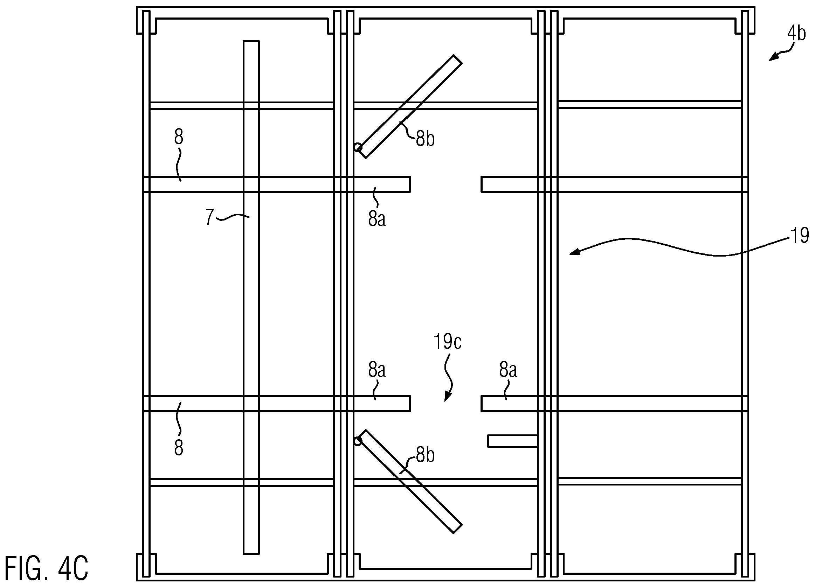

Die Figur 4C zeigt einen Zustand während des weiteren Umstellens der Vertikalweiche 19. Demnach werden die beweglichen Geradsegmente 8b zusätzlich aus einer zu den Schienen 8 parallelen Stellung horizontal in eine quer zu den Schienen 8 ausgerichtete Stellung geschwenkt. Dies dient dazu, die Shuttles 7 durch eine so zwischen den beweglichen Kurvensegmenten 8a gebildete Lücke 19c der Vertikalweiche 19 zu führen, sodass sie zwischen der oberen und unteren Ebene 4a, 4b des Transportsystems 4 entlang der beweglichen Kurvensegmente 8a laufen können.

Dieser Vorgang ist in der Figur 4D für die Ausleitstellung 21 (oben) und die Ausleitstellung 21 und Einleitstellung 22 (unten) exemplarisch dargestellt. Demnach fährt ein leeres Shuttle 7 am eingangsseitigen Ausleitabschnitt 19a der Vertikalweiche 19 von der unteren Ebene 4a in die obere Ebene 4b des Transportsystems 4 entlang der zugehörigen beweglichen Kurvensegmente 8a. Diese Momentaufnahme ist ebenso in der Figur 3 in seitlicher Ansicht dargestellt.

Ist die Vertikalweiche 19 als Kombiweiche sowohl zum Ausleiten als auch zum Einleiten leerer Shuttles 7 ausgebildet, so ist dies bei der in den Figuren 3 und 4A bis 4D dargestellten Konfiguration nur abwechselnd möglich. Das heißt, die zwischen dem Ausleitbereich 19a und dem Einleitbereich 19b ausgebildete Lücke 19c ist so groß, dass die Shuttles 7 jeweils nur in einer Richtung durch die Lücke 19c fahren können. Dies minimiert die Abmessung der Vertikalweiche 19 in Pufferrichtung PR.

Gegebenenfalls können mehrere Vertikalweichen 19 über der Pufferfläche 3 in das Transportsystem 4 integriert sein. Derartige Vertikalweichen 19 können als Kombiweiche, ausschließliche Ausleitweiche und/oder ausschließliche Einleitweiche konfiguriert sein und als Module flexibel in das Transportsystem 4 eingebunden werden.

Zum Umstellen der Vertikalweiche 19 zwischen ihrer inaktiven Stellung 20 und der Ausleitstellung 21 / Einleitstellung 22 werden die beweglichen Kurvensegmente 8a und die beweglichen Geradsegmente 8b der Vertikalweichen 19 vorzugsweise auf Lineareinheiten befestigt und entsprechend gesteuert von diesen verschoben. Für die beweglichen Geradsegmente 8b sind dann ferner Schwenkeinheiten vorhanden, die beispielsweise von zugeordneten Servomotoren angetrieben werden können. Geeignete Ausführungsformen für zugeordnete Lineareinheiten und Servomotoren sind prinzipiell bekannt und daher in den Figuren nicht bezeichnet.

Die jeweils eingesetzten beweglichen Kurvensegmente 8a oder Geradsegmente 8b werden vorzugsweise mit den daran anschließenden Abschnitten der Schienen 8 mechanisch abgesteckt, um deren bündigen Anschluss zu stabilisieren und die Geradsegmente 8b jeweils beidseitig abzustützen.

Das Verschieben der beweglichen Kurvensegmente 8a und Geradsegmente 8b sowie das Schwenken der Geradsegmente 8b kann beispielsweise mittels gegenläufiger Kurbelschwingen und/oder Elektrozylinder erfolgen. Das Verschieben kann gegebenenfalls auch mittels Zahnriemenantrieben oder dergleichen bewirkt werden.

Die Vertikalweiche 19 ermöglicht es, leere Shuttles 7 vertikal, also zwischen unterschiedlichen Ebenen 4a, 4b des Transportsystems 4 umzusetzen und dadurch gezielt im Bereich der Verzweigungsförderbänder 13, 14 aus- und/oder einzuschleusen.

Prinzipiell wäre dies auch mit mehr als zwei übereinander angeordneten Etagen / Ebenen 4a, 4b des Transportsystems 4 möglich (nicht dargestellt).

Die etagenartige Anordnung unterschiedlicher Ebenen 4a, 4b des Transportsystems 4 übereinander reduziert den Flächenverbrauch für das Puffern leerer Shuttles 7 und ermöglicht für deren Einschleusen / Ausschleusen in die / von der Pufferfläche 3 mit der wenigstens einen Vertikalweiche 19 einen besonders effizienten Arbeitsbetrieb.

Die Vertikalweichen 19 ermöglichen ein Einleiten / Ausleiten leerer Shuttles 7 ohne Quertransport der Shuttles 7 bezüglich der Pufferrichtung PR. Daher können die Fahrwerke der Shuttles 7 starr ausgerichtet sein, müssen also nicht horizontal drehbar sein, was den Konstruktionsaufwand und die Abmessungen reduziert.

Die Vertikalweichen 19 ermöglichen gegenüber bekannten Horizontalweichen eine platzsparende Anordnung des Leershuttle-Puffers 18 sowie vereinfachte Fahrwerke und Antriebe der Shuttles 7. Während bei Horizontalweichen mit großer Spurbreite in der Regel Shuttles mit drehbaren Fahrwerken und getrennten Antrieben für die rechte und linke Schiene benötigt werden, benötigen die Shuttles 7 der Vorrichtung 1 jeweils nur einen einzelnen Antriebsmotor (nicht dargestellt), der dann beispielsweise über Kardanwellen mit den Fahrwerken (nicht dargestellt) für die rechten und linken Schienen 8 verbunden ist.

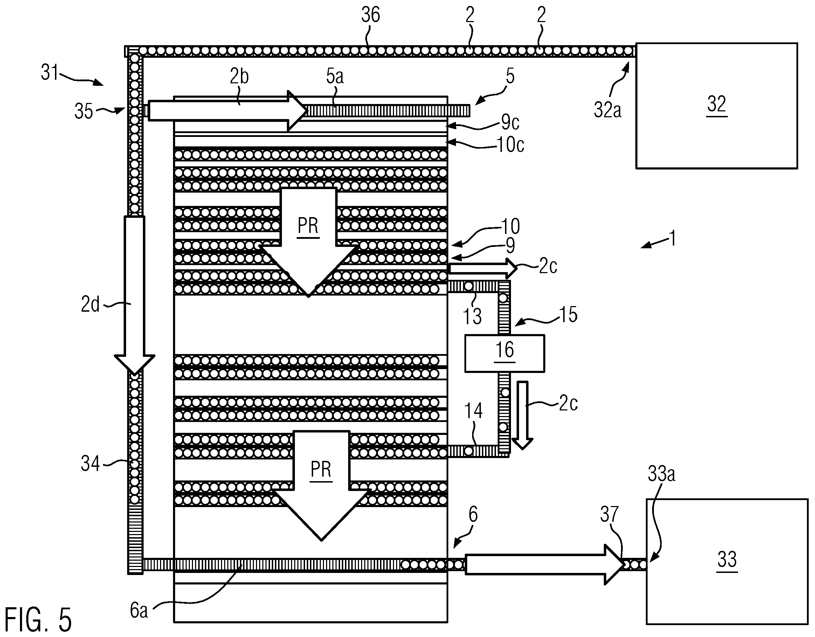

Die Figur 5 zeigt schematisch eine erste Abfüllanlage 31 mit der Vorrichtung 1, mit einer ersten Behandlungsmaschine 32, mit einer zweiten Behandlungsmaschine 33 und mit einem Umgehungsförderband 34 zwischen dem Einlaufbereich 5 und dem Auslaufbereich 6 der Vorrichtung 1.

Die Abfüllanlage 31 umfasst ferner eine Horizontalweiche 35, die ein an den Ausgang 32a der ersten Behandlungsmaschine 32 anschließendes erstes Förderband 36 wahlweise mit dem Einlaufförderband 5a der Vorrichtung 1 als auch mit dem Umgehungsförderband 34 verbinden kann. Das Auslaufförderband 6a der Vorrichtung 1 ist über ein zweites Förderband 37 an den Eingang 33a der zweiten Behandlungsmaschine 33 angeschlossen.

Zu erkennen ist ferner, dass die Vorrichtung 1 ein hinteres Verzweigungsförderband 13 zum Ausspeichern von Behältern 2 umfasst sowie ein vorderes Verzweigungsförderband 14 zum Einspeichern der mit dem hinteren Verzweigungsförderband 13 ausgespeicherten Behälter 2 zurück auf die Pufferfläche 3. Die Verzweigungsförderbänder 13, 14 sind durch eine Umgehungsstrecke 15 mit einer Inspektionseinheit 16 miteinander verbunden. In der Inspektionseinheit 16 können einzelne Behälter 2 beispielsweise stichprobenartig inspiziert werden, wobei das Einspeichern und Ausspeichern der zu inspizierenden bzw. inspizierten Behälter 2 flexibel über die Verzweigungsförderbänder 13, 14 in die Führungskanäle 9c, 10c der Reihenschieber 9, 10 bzw. aus denen heraus möglich ist.

Beispielsweise kann von einem dem Einlaufbereich 5 der Vorrichtung 1 zugeführten Anteil 2b der von der ersten Behandlungsmaschine 32 zulaufenden Behälter 2 ein vergleichsweise kleiner Anteil 2c von der Pufferfläche 3 ausgespeichert werden, um vergleichsweise zeitaufwändige Offline-Inspektionen, wie beispielsweise optische Messungen, Laboruntersuchungen und/oder visuelle Stichproben durchzuführen. Der Anteil 2c der Behälter 2 kann dann je nach Art der Inspektion / Probennahme wieder auf die Pufferfläche 3 eingespeichert werden, gegebenenfalls auch im reduzierten Umfang. Hierbei kann das Einspeichern und Ausspeichern unter Einhaltung des First-in-first-out-Prinzips erfolgen.

Über das Umgehungsförderband 34 kann ein Anteil 2d der von der ersten Behandlungsmaschine 32 zulaufenden Behälter 2 ohne Einbeziehung des Einlaufbereichs 5 und der Pufferfläche 3 der Vorrichtung 1 zur zweiten Behandlungsmaschine 33 geführt werden.

Dies kann beispielsweise vorteilhaft sein, wenn der Speicherbetrieb auf der Pufferfläche 3 gestört ist und/oder falls lediglich ein bestimmter Anteil 2b der von der ersten Behandlungsmaschine 32 kommenden Behälter 2 im Sinne eines Behälterüberschusses oder einer Sicherheitsreserve über die Pufferfläche 3 geführt werden soll. Dies wäre auch im regulären Produktionsbetrieb denkbar, um die Auslastung und den Verschleiß der Vorrichtung 1 zu minimieren.

Die erste Behandlungsmaschine 32 könnte beispielsweise eine Etikettiermaschine sein, die zweite Behandlungsmaschine 33 beispielsweise eine Verpackungsmaschine. Ebenso möglich wäre, dass die erste Behandlungsmaschine 32 eine Füll-/ Verschließmaschine ist und die zweite Behandlungsmaschine 33 eine Etikettiermaschine. Die Behandlungsmaschine 32 kann auch eine Kombination aus Blasmaschine, Etikettiermaschine und Füllmaschine mit anschließender Verschließmaschine umfassen.

Je nach gegebenenfalls erforderlicher Einhaltung eines First-in-first-out-Prinzips können die Behältereingänge, beispielsweise zum Einlaufbereich 5, und die Behälterausgänge, beispielsweise vom Auslaufbereich 6, ebenso diejenigen an den Verzweigungsförderbändern 13, 14, an der Vorrichtung 1 sowohl an derselben Seite der Pufferfläche 3 oder an gegenüberliegenden Seiten der Pufferfläche 3 (jeweils quer zur Pufferrichtung PR gesehen) angeordnet sein. Beispielsweise können einzelne Verzweigungsförderbänder 13, 14 und/oder Umgehungsförderbänder 34 sowie Förderbänder 36 stromaufwärts der Vorrichtung 1 und/oder Förderbänder 37 stromabwärts der Vorrichtung 1 in Schleifen um die Pufferfläche 3 verlaufen. Beispielsweise kann durch ein Umgehungsförderband 34 die Reihenfolge der Behälter 2 zur Einhaltung eines First-in-first-out-Prinzips gezielt umgekehrt werden.

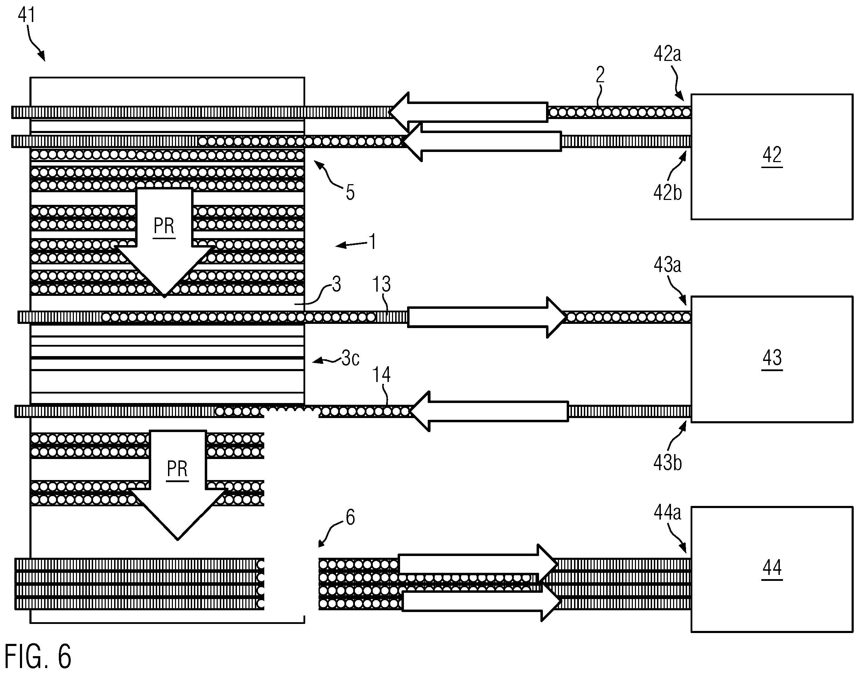

Die Figur 6 zeigt schematisch eine zweite Abfüllanlage 41 mit der Vorrichtung 1, mit einer ersten Behandlungsmaschine 42, mit einer zweiten Behandlungsmaschine 43 und mit einer dritten Behandlungsmaschine 44.

Demnach können Behälter 2 unterschiedlicher Zwischenproduktstufen, also beispielsweise unmittelbar nach Füllen / Verschließen und unmittelbar nach Etikettierung, gleichzeitig in der Vorrichtung 1 gepuffert werden und dabei sich dabei auf derselben Pufferfläche 3 befinden.

Gemäß dem Beispiel der Figur 6 sind zwei Ausgänge 42a, 42b der ersten Behandlungsmaschine 42, die beispielsweise zum Füllen und Verschließen der Behälter 2 dient, an den Einlaufbereich 5 der Vorrichtung 1 angeschlossen. Ferner ist ein Eingang 43a der zweiten Behandlungsmaschine 43, die beispielsweise eine Etikettiermaschine ist, an das hintere Verzweigungsförderband 13 angeschlossen und ein Ausgang 43b der zweiten Behandlungsmaschine 43 an das vordere Verzweigungsförderband 14. Der Auslaufbereich 6 der Vorrichtung 1 ist an den Eingang 44a der dritten Behandlungsmaschine 3 angeschlossen, die beispielsweise eine Verpackungsmaschine ist.

Demnach können die Behälter 2 von der ersten Behandlungsmaschine 1 entweder von beiden Ausgängen 42a, 42b und somit zweibahnig der Pufferfläche 3 zugeführt werden, gegebenenfalls aber auch nur einbahnig aus einem der Ausgänge 42a, 42b der ersten Behandlungsmaschine 42.

Die Behälter 2 werden vorzugsweise einbahnig aus der Pufferfläche 3 ausgespeichert, der zweiten Behandlungsmaschine 43 zugeführt und von dieser wieder einbahnig zurück zur Pufferfläche 3 zurückgeführt und dort wieder eingespeichert.

Zwischen den Verzweigungsförderbändern 13, 14 kann auf der Pufferfläche 3 gegebenenfalls ein Pufferbereich 3c für leere Shuttles 7 vorgehalten werden. Gegebenenfalls könnte zwischen den Verzweigungsförderbändern 13, 14 auch die zuvor beschrieben Vertikalweiche 19 ausgebildet sein, beispielsweise eine Vertikalweiche 19 zum Ausleiten leerer Shuttles 7 aus dem Bereich des hinteren Verzweigungsförderbands 13 und eine Vertikalweiche 19 zum Einleiten leerer Shuttles 7 in den Bereich des vorderen Verzweigungsförderbands 14.

Prinzipiell können die Verbindungen zwischen den Behandlungsmaschinen 42, 43, 44 und der Vorrichtung 1 einbahnig und/oder mehrbahnig ausgebildet sein.

Es ist auch denkbar, dass die erste Behandlungsmaschine 42 zwei voneinander unabhängige Behandlungseinheiten umfasst, die beispielsweise zur Behandlung unterschiedlicher Füllgüter und/oder Behälterformate ausgebildet sind. Es könnte dann beispielsweise die eine Behandlungseinheit an den einen Ausgang 42a der ersten Behandlungsmaschine 42 angeschlossen sein und die andere Behandlungseinheit an den anderen Ausgang 42b. Die Behälter würden dann gegebenenfalls abwechselnd je nach Füllgut / Behälterformat auf unterschiedlichen Förderbändern der Vorrichtung 1 zugeführt werden.

Dies ist ebenso für die zweite Behandlungsmaschine 43 denkbar, die ebenso voneinander unabhängige Behandlungseinheiten umfassen kann, beispielsweise um je nach Füllgut und/oder Behälterformat unterschiedliche Etikettentypen an den Behältern 2 anzubringen.

Prinzipiell gilt das für die erste und zweite Behandlungsmaschine 42, 43 Beschriebene auch für die dritte Behandlungsmaschine 44, die voneinander unabhängige Einheiten umfassen kann, um darin entweder parallel oder abwechselnd Behälter 2 zu verarbeiten, beispielsweise abhängig vom Füllgut und/oder Behälterformat.

Prinzipiell wäre es auch denkbar, die erste und/oder zweite und/oder dritte Behandlungsmaschine 42, 43, 44 auf unterschiedlichen Seiten (quer zur Pufferrichtung PR) der Pufferfläche 3 anzuordnen.

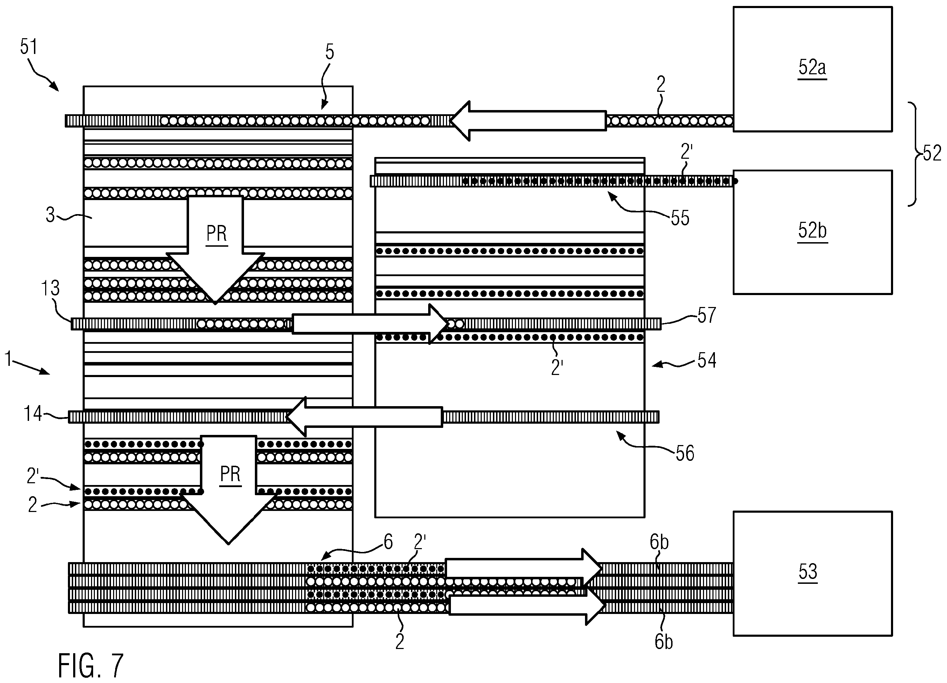

Die Figur 7 zeigt schematisch eine dritte Abfüllanlage 51 mit der Vorrichtung 1, mit einer ersten Behandlungsmaschine 52 umfassend eine erste unabhängigen Behandlungseinheit 52a und eine zweite unabhängige Behandlungseinheit 52b, mit einer zweiten Behandlungsmaschine 53 und mit einer nebengeordneten Puffervorrichtung 54 zum Puffern der Behälter 2 im Wesentlichen nach demselben Funktionsprinzip wie die Vorrichtung 1.

Die nebengeordnete Puffervorrichtung 54 umfasst demnach einen Einlaufbereich 55, einen Auslaufbereich 56 und wenigstens ein Verzweigungsförderband 57, welches in die Pufferfläche der nebengeordneten Puffervorrichtung 54 in Analogie zur Vorrichtung 1 integriert ist.

Demnach ist die erste Behandlungseinheit 52a der ersten Behandlungsmaschine 52 ausgangsseitig mit dem Einlaufbereich 5 der Vorrichtung 1 verbunden, die zweite Behandlungseinheit 52b der ersten Behandlungsmaschine 52 auslaufseitig dagegen mit dem Einlaufbereich 55 der nebengeordneten Puffervorrichtung 54.

Ferner ist ein hinteres Verzweigungsförderband 13 der Vorrichtung 1 mit dem Verzweigungsförderband 57 der nebengeordneten Puffervorrichtung 54 verbunden oder identisch, um Behälter 2 aus der Vorrichtung 1 auszuspeichern und in die nebengeordnete Puffervorrichtung 54 einzuspeichern.

Der Auslaufbereich 56 der nebengeordneten Puffervorrichtung 54 ist ferner mit einem vorderen Verzweigungsförderband 14 der Vorrichtung 1 verbunden oder identisch, um Behälter 2 aus der nebengeordneten Puffervorrichtung 54 auszuspeichern und in die Vorrichtung 1 einzuspeichern.

Der Auslaufbereich 6 der Vorrichtung 1 ist vorzugsweise mehrspurig an die zweite Behandlungsmaschine 53 angeschlossen.

Die voneinander unabhängigen Behandlungseinheiten 52a, 52b der ersten Behandlungsmaschine 52 dienen vorzugsweise demselben Behandlungsschritt, also beispielsweise dem Füllen und Verschließen der Behälter 2 oder dem Etikettieren der Behälter 2 oder dem Füllen, Verschließen und Etikettieren der Behälter 2. Die Behandlungseinheiten 52a, 52b können aber auch eine Kombination aus den folgende Behandlungsschritten Behälter 2 formen in einer Blasmaschine, Behälter 2 etikettieren in einer Etikettiermaschine, Behälter 2 füllen und verschließen in einer Füllmaschine mit anschließender Verschließmaschine umfassen. In den Behandlungseinheiten 52a, 52b werden jedoch vorzugsweise unterschiedliche Füllgüter und/oder unterschiedliche Behälterformate verarbeitet.

Somit können auf der Pufferfläche 3 der Vorrichtung 1 und auf der Pufferfläche der nebengeordneten Puffervorrichtung 54 unterschiedliche Behälterformate und/oder Füllgüter gepuffert, also gespeichert und transportiert werden.

Dies ist in der Figur 7 durch unterschiedliche Symbole für die in den Behandlungseinheiten 52a, 52b behandelten Behälter 2, 2' dargestellt. Demnach können die in den Behandlungseinheiten 52a, 52b hergestellten Behälter 2, 2' unter Einbeziehung der nebengeordneten Puffervorrichtung 54 auch in einer gemischten Abfolge auf der Pufferfläche 3 der Vorrichtung 1 zu deren Auslaufbereich 6 vorgeschoben werden und entsprechend gemischt auf nebeneinander angeordnete Transportgassen 6b verteilt werden. Der zweiten Behandlungsmaschine 53 können somit parallel Behälter 2, 2' mit unterschiedlichen Füllgütern und/oder unterschiedlicher Behälterformate zugeführt werden. Somit können unterschiedliche Behälterformate sogenannte Mischgebinde erzeugt werden.

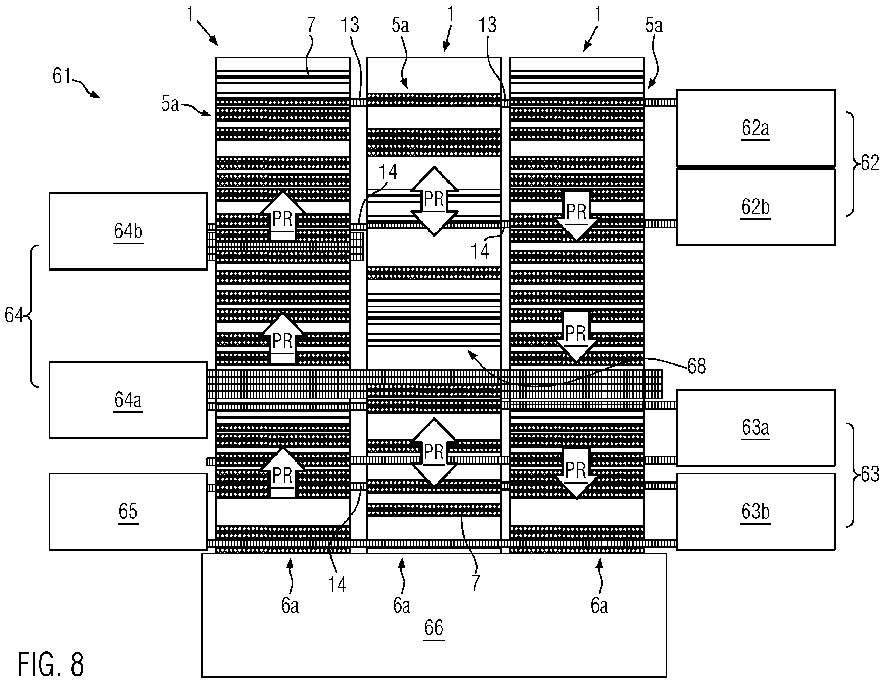

Die Figur 8 zeigt schematisch eine vierte Abfüllanlage 61 mit mehreren Vorrichtungen 1 gemäß wenigstens einer der voranstehend beschriebenen Ausführungsformen, die mittels mehrerer Verzweigungsförderbänder 13, 14 miteinander quer zurjeweiligen Pufferrichtung PR verbunden sind. Ferner können an die Vorrichtungen 1 beispielsweise wenigstens eine erste Behandlungsmaschine 62 mit unabhängigen Behandlungseinheiten 62a, 62b, wenigstens eine zweite Behandlungsmaschine 63 mit unabhängigen Behandlungseinheiten 63a, 63b, wenigstens eine dritte Behandlungsmaschine 64 mit unabhängigen Behandlungseinheiten 64a, 64b, eine Puffervorrichtung 65 konventioneller Bauart und/oder ein Produktlager 66 oder dergleichen angeschlossen sein.

Die Vorrichtungen 1 sind jeweils bezogen auf ihre Pufferrichtungen PR quer zueinander angeordnet und durch Einlaufförderbänder 5a, Auslaufförderbänder 6a und/oder Verzweigungsförderbänder 13, 14 quer zur jeweiligen Pufferrichtung PR miteinander verbunden.

Demnach können die Pufferrichtungen PR der einzelnen Vorrichtungen 1 auch voneinander abweichen, also beispielsweise gegenläufig sein. Es ist ebenso denkbar, dass die Pufferrichtung PR wenigstens einer der Vorrichtungen 1 umkehrbar ist. Dies ist in der Figur 8 für die mittlere der Vorrichtungen 1 beispielhaft mittels eines Doppelpfeils schematisch angedeutet.

Die erste Behandlungsmaschine 62 mit ihren unabhängigen Behandlungseinheiten 62a, 62b dient vorzugsweise einem ersten Produktionsschritt, beispielsweise dem Füllen und Verschließen der Behälter 2. Die zweite Behandlungsmaschine 63 mit ihren unabhängigen Behandlungseinheiten 63a, 63b dient vorzugsweise einem anderen Behandlungsschritt, beispielsweise dem Verpacken der Behälter 2. Die dritte Behandlungsmaschine 64 mit ihren unabhängigen Behandlungseinheiten 64a, 64b dient vorzugsweise einem wiederum davon abweichenden Behandlungsschritt, beispielsweise der Etikettierung der Behälter 2.

In den jeweils unabhängigen Behandlungseinheiten obiger Behandlungsmaschinen können beispielsweise unterschiedliche Füllgüter und/oder unterschiedliche Behälterformate verarbeitet werden.

Somit ist mit der Abfüllanlage 61 eine flexible Verarbeitung unterschiedlicher Füllgüter und/oder Behälterformate möglich, gegebenenfalls ebenso die Integration eines Leershuttle-Puffers 68 auf einer der Pufferflächen 3 der Vorrichtung 1.

Bei dem konventionellen Puffer 65 handelt es sich beispielsweise um einen Schleifenpuffer oder um einen Wendelpuffer.

Das Lager 66 kann beispielsweise dazu dienen, einzelne oder Gruppen von Behältern 2 separat zu speichern, oder auch gemeinsam mit zugeordneten Shuttles 7. Das Lager 66 kann also zur Speicherung beladener Shuttles 7 ausgebildet sein. Dadurch ließe sich die Pufferkapazität der Abfüllanlage 61 flexibel und gegebenenfalls auch nachträglich anpassen.

Das Lager 66 könnte auch mehrere Lageretagen umfassen, um den Platzbedarf für die Abfüllanlage 61 zu reduzieren.

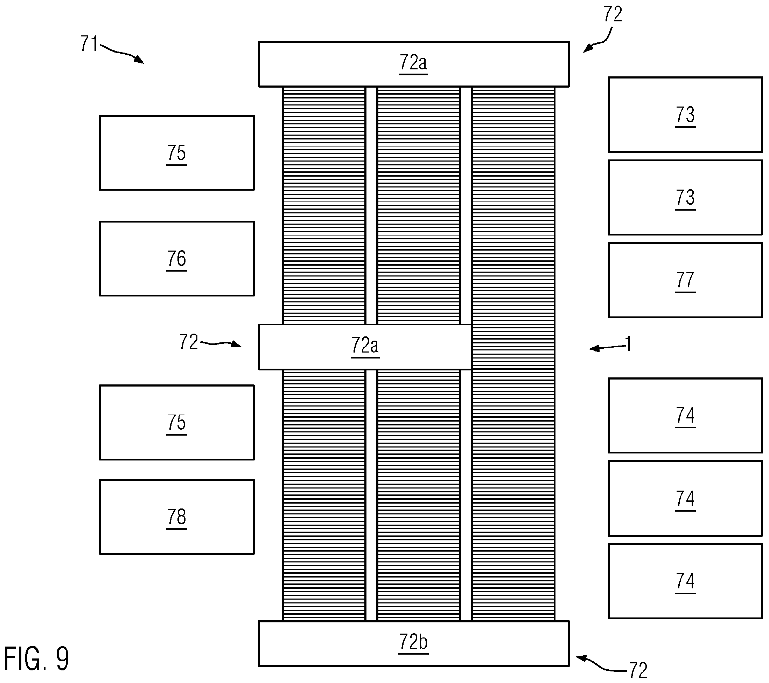

Die Figur 9 zeigt schematisch eine fünfte Abfüllanlage 71, bei der nicht beladene Shuttles 7 mittels eines Liftsystems 72 zwischen den Pufferflächen 3 der einzelnen Vorrichtungen 1 und wenigstens einer darüber angeordneten Speicheretage für leere und/oder beladene Shuttles 7 hin und her bewegt werden können.

Beispielhaft dargestellt ist ein Liftsystem 72 mit einem ersten Lift 72a an einer der stirnseitigen Enden der Vorrichtung 1, einem zweiten Lift 72b am anderen stirnseitigen Ende der Vorrichtung 1 sowie einem dazwischen und über wenigstens zwei der Pufferflächen 3 angeordneten Lift 72c.

Damit können sowohl beladene als auch leere Shuttles 7 flexibel über verschiedene Etagen verteilt werden, ohne die Shuttles 7 in den jeweils oberen Etagen kopfüber führen zu müssen. Das heißt, erst durch ein Liftsystem 72 mit Liften 72a, 72b, 72c ist es möglich, neben leeren Shuttles 7 auch beladene Shuttles 7 auf unterschiedlichen Etagen der Vorrichtungen 1 einzuspeichern, zu verschieben und von dort wieder auszuspeichern.

Der Vollständigkeit halber dargestellt sind ferner erste Behandlungsmaschinen 73 zur Durchführung eines ersten Behandlungsschritts der Behälter 2, zweite Behandlungsmaschinen 74 zur Durchführung eines zweiten Behandlungsschritts an den Behältern 2, dritte Behandlungsmaschinen 75 zur Durchführung eines dritten Behandlungsschritts an den Behältern 2, eine vierte Behandlungsmaschine 76 zur Durchführung eines vierten Behandlungsschritts an den Behältern 2, eine fünfte Behandlungsmaschine 77 zur Durchführung eines fünften Behandlungsschritts an den Behältern 2 und eine sechste Behandlungsmaschine 78 zur Durchführung eines sechsten Behandlungsschritts an den Behältern 2.

Die ersten bis sechsten Behandlungsschritte unterscheiden sich vorzugsweise voneinander und können auch eine Inspektion der Behälter 2 beinhalten oder sein.

Mit der beschriebenen Vorrichtung 1 und deren Einbindung in die exemplarisch beschriebenen Abfüllanlagen 31, 41, 51, 61 und 71 lassen sich flexible Produktionskonzepte hinsichtlich der Verarbeitung unterschiedlicher Füllgüter und Behälterformate sowie hinsichtlich der Bewältigung unterschiedlicher Produktionszustände, beispielsweise unterschiedlicher Anlagenauslastung, Störfälle oder dergleichen mit vergleichsweise geringem Platzbedarf und unter Einhaltung eines staudrucklosen Pufferbetriebs, also ohne gegenseitigen Staudruck der Behälter, durchführen.

Allerdings wäre es zudem wünschenswert, Produktionsumstellungen zu verkürzen. Denn in der Regel muss der Behälterzulauf in die Vorrichtung 1 nach dem Einlauf restlicher Behälter 2 einer Sorte aus alter Produktion beispielsweise im Bereich einer vorgeschalteten Weiche gesperrt werden. Restliche Behälterreihen 2a werden, soweit wie möglich, durch die Vorrichtung 1 gefördert und abgearbeitet. Sobald jedoch eine oder mehrere Gassen im Zulauf einer stromabwärts angeordneten Verpackungsmaschine nicht mehr befüllt werden können, wird deren Zulauf gesperrt. Die Verpackungsmaschine wird leergefahren, und restliche Behälter aus den Gassen müssen gegebenenfalls manuell entfernt werden. Anschließend erfolgt die Formatumstellung von Zulauf, Shuttles, Auslauf der Vorrichtung 1 sowie der Verpackungsmaschine. Nach der Umstellung wird die Zulaufsperre aufgehoben und die neue Behältersorte zugeführt.

Eine Vereinfachung demgegenüber ermöglicht die in der Figur 10 schematisch dargestellte sechste Abfüllanlage 81 mit der Vorrichtung 1 und einem Restbehälterbahnhof 82 im Anschluss an mehrere vorzugsweise bidirektional angetriebene Verzweigungsförderbänder 13, 14. Der Restbehälterbahnhof 82 kann hierzu beispielsweise in Verlängerung der Verzweigungsförderbänder 13, 14 ausgebildete Speicherbänder 83, 84 umfassen. Auch könnten sich die Verzweigungsförderbänder 13, 14 entsprechend in den Restbehälterbahnhof 82 erstrecken.

Beispielhaft dargestellt sind ferner der Einlaufbereich 5 der Vorrichtung 1 mit Einlaufförderbändern 5a, 5b, der Auslaufbereich 6 mit dem Auslaufförderband 6a, die Pufferfläche 3, die Shuttles 7 und die Schienen 8 des Transportsystems 4.

Die Funktionsweise des Restbehälterbahnhofs 82 bei einer Produktionsumstellung von Behältern 2 alter Produktion auf Behälter 2' neuer Produktion ist beispielsweise ohne Änderung des Behälterdurchmessers wie folgt möglich.

Die Behälter 2 der alten Behältersorte und die Behälter 2' der neuen Behältersorte können demnach im Bereich des einreihigen Zulaufs zur Vorrichtung 1 lückenlos aneinander anschließen.

Ein gegebenenfalls dadurch nicht sortenrein mit alten und neuen Behältern 2, 2' beladener Reihenschieber 9, 10 wird von einem der Verzweigungsförderbänder 13, 14 entleert, die Behälter 2, 2' als gemischter Restbehälterpulk 85 aus alter und neuer Produktion dadurch im Behälterbahnhof 82 geparkt.

Dort könnten sich gegebenenfalls auch bereits weitere, in der Verpackungsmaschine (nicht dargestellt) stromabwärts zunächst nicht mehr zu verarbeitende sortenreine Restbehälterpulks 86 aus der alten Produktion befinden. Diese können jedoch prinzipiell bei der nächsten Produktion der gleichen Sorte wieder in die Vorrichtung 1 eingeschleust werden.

Nicht sortenreine Restbehälterpulks 85 werden aus dem Behälterbahnhof 82 entfernt oder können dort in sortenreine Restbehälterpulks 86 umsortiert werden, um ebenfalls bei der nächsten Produktion wieder eingeschleust zu werden.

Um beim Produktwechsel eine unerwünschte Sortenvermischung der in der Verpackungsmaschine herzustellenden Gebinde zu verhindern, kann beispielsweise die pro Reihenschieber 9, 10 gespeicherte Anzahl von Behältern 2, 2' dem Vielfachen der pro Gebinde in Transportrichtung benötigten Behälter 2, 2' entsprechen (im dargestellten Fall also ein Vielfaches von drei). Alternativ können unerwünscht sortenvermischte Gebinde zum Beispiel nach der Verpackungsmaschine detektiert und ausgeschleust werden.

Bei Änderung des Behälterdurchmessers ergibt sich beispielsweise folgender Formatwechsel:
Nachdem die restlichen Behälter 2 der alten Produktion in die Vorrichtung 1 eingespeist wurden, wird der Zulauf gesperrt, um den Zulauf und die Shuttles 7 anschließend manuell oder automatisch auf den neuen Behälterdurchmesser einzustellen, beispielsweise im Leershuttle-Puffer 18.

Nach Umstellung des Zulaufs und der ersten verfügbaren Shuttles 7 wird die Zulaufsperre aufgehoben und unmittelbar anschließend die Behälter 2' des neuen Formats zugeführt, um Stillstandzeiten soweit wie möglich zu vermeiden.

Während der ganzen Umstellphase kann die Vorrichtung 1 unterbrechungsfrei die Behälter 2 der alten Produktion abarbeiten, und überschüssige Restbehälterpulks 85, 86 der alten Produktion (wie zuvor beschrieben) werden in den Restbehälterbahnhof 82 gefahren. Somit ist ein zeitsparender fliegender Sortenwechsel / Formatwechsel möglich.

## Patentansprüche

1. Verfahren zum Puffern von Behältern (2) in einer Abfüllanlage (31, 41, 51, 61, 71), wobei Behälter einreihig gruppiert auf wenigstens einem Einlaufförderband (5a) eingespeichert werden, auf einer quer daran anschließenden Pufferfläche (3) von schienengeführten und einzeln angetriebenen Shuttles (7) mit Reihenschiebern (9, 10) in einer zur Einlaufrichtung (ER) quer verlaufenden Pufferrichtung (PR) einreihig verschoben werden und auf wenigstens einem in Pufferrichtung quer daran anschließenden Auslaufförderband (6a) ausgespeichert werden, **dadurch gekennzeichnet, dass** ferner Behälter (2) mittels in die Pufferfläche integrierter Verzweigungsförderbänder (13, 14) quer zur Pufferrichtung und unabhängig vom Einlaufförderband und Auslaufförderband von der Pufferfläche ausgespeichert und/oder auf der Pufferfläche eingespeichert wird.

2. Verfahren nach Anspruch 1, wobei die von wenigstens einem der Verzweigungsförderbänder (14) eingespeicherten Behälter (2) einerseits und die vom Einlaufförderband (5a) eingespeicherten Behälter andererseits unmittelbar stromaufwärts auf voneinander abweichende Weise und/oder getrennt voneinander behandelt, inspiziert und/oder gespeichert werden.

3. Verfahren nach Anspruch 1 oder 2, wobei die von wenigstens einem der Verzweigungsförderbänder (13) ausgespeicherten Behälter (2) einerseits und die vom Auslauförderband (6a) ausgespeicherten Behälter andererseits unmittelbar stromabwärts auf voneinander abweichende Weise und/oder getrennt voneinander behandelt, inspiziert und/oder gespeichert werden.

4. Verfahren nach einem der vorigen Ansprüche, wobei die Behälter (2) mittels wenigstens zwei der Verzweigungsförderbänder (13, 14) unmittelbar vor und/oder nach einer Etikettierung, Inspektion oder Pufferung ausgespeichert und eingespeichert werden.

5. Verfahren nach einem der vorigen Ansprüche, wobei auf der Pufferfläche (3) erste Behälter (2) mit einem ersten Füllgut und/oder eines ersten Behälterformats transportiert werden und zweite Behälter (2') mit einem zweiten Füllgut und/oder eines zweiten Behälterformats mittels wenigstens eines der Verzweigungsförderbänder (14) aus einer nebengeordneten Puffervorrichtung (54) ausgespeichert und in die Reihenschieber (9, 10) eingespeichert werden, und wobei die ersten und zweiten Behälter als gemischte Abfolge, insbesondere in entweder mit den ersten oder zweiten Behältern beladenen Reihenschiebern, zum Auslaufbereich (6) vorgeschoben und dort insbesondere in entweder den ersten oder den zweiten Behältern zugeordnete Transportgassen (6b) geleitet werden und so gemischte Behälterformate sogenannte Mischgebinde erzeugt werden.

6. Verfahren nach einem der vorigen Ansprüche, wobei bei einem Produktwechsel / Formatwechsel stromabwärts überschüssige Behälter (2) alter Produktion mittels wenigstens eines der Verzweigungsförderbänder (13, 14) auf einen Restbehälterbahnhof (82) ausgeschleust werden, insbesondere unter lückenlos aneinander anschließendem Einlauf von Behältern (2', 2) alter und neuer Produktion.

7. Verfahren nach wenigstens einem der vorigen Ansprüche, wobei beim Ausspeichern an wenigstens einem der Verzweigungsförderbänder (13) entleerte Shuttles (7) mittels einer zuschaltbaren Vertikalweiche (19) von der Pufferfläche (3) weggefahren / abgehoben und anschließend zwischengespeichert werden.

8. Verfahren nach wenigstens einem der vorigen Ansprüche, wobei beim Einspeichern an wenigstens einem der Verzweigungsförderbänder (14) zu beladene Shuttles (7) mittels einer zuschaltbaren Vertikalweiche (19) nach Zwischenspeicherung auf die Pufferfläche (3) gefahren / abgesenkt werden.

9. Verfahren nach wenigstens einem der vorigen Ansprüche, wobei die Reihenschieber (9, 10) die Behältergruppen einreihig und jeweils beidseitig zwischen in Pufferrichtung vorauslaufenden vorderen und nachlaufenden hinteren Reihenführungen (9a, 10a,9b, 10b) aufnehmen.

10. Vorrichtung (1) zum staudrucklosen Puffern einreihig gruppierter Behälter (2) in einer Abfüllanlage, umfassend eine Pufferfläche (3) und ein darüber angeordnetes Transportsystem (4) zum Verschieben der Behälter auf der Pufferfläche in einer Pufferrichtung (PR) von einem Einlaufbereich (5) mit wenigstens einem quer zur Pufferrichtung (PR) verlaufenden Einlaufförderband (5a) in einen Auslaufbereich (6) mit einem quer zur Pufferrichtung verlaufenden Auslaufförderband (6a), wobei das Transportsystem an Schienen (8) geführte und unabhängig voneinander angetriebene Shuttles (7) mit quer zur Pufferrichtung ausgerichteten Reihenschiebern (9, 10) zum einreihig gruppierten Verschieben der Behälter umfasst, **gekennzeichnet durch** in die Pufferfläche integrierte Verzweigungsförderbänder (13,14), die quer zur Pufferrichtung verlaufen und unabhängig vom Einlaufförderband und vom Auslaufförderband angetrieben sind, um Behälter einreihig von der Pufferfläche auszuspeichern und/oder einreihig auf dieser einzuspeichern.

11. Vorrichtung nach Anspruch 10, wobei das Transportsystem (4) ferner, insbesondere jeweils über der Pufferfläche (3) angeordnet, einen Leershuttle-Puffer (18) und eine zuschaltbare Vertikalweiche (19) umfasst, mit der beim Ausspeichern an wenigstens einem der Verzweigungsförderbänder (13) entleerte Shuttles (7) zur Zwischenspeicherung von der Pufferfläche in den Leershuttle-Puffer geleitet werden können.

12. Vorrichtung nach Anspruch 10 oder 11, wobei das Transportsystem (4) ferner, insbesondere jeweils über der Pufferfläche (3) angeordnet, einen Leershuttle-Puffer (18) und eine zuschaltbare Vertikalweiche (19) umfasst, mit der beim Einspeichern an wenigstens einem der Verzweigungsförderbänder (14) zu beladene Shuttles (7) aus dem Leershuttle-Puffer auf die Pufferfläche geleitet werden können.

13. Vorrichtung nach wenigstens einem der Ansprüche 10 bis 12, ferner mit einem Umgehungsförderband (34), das mittels einer Horizontalweiche (35) am Anfang / Eingang des Einlaufförderbands (5a) abzweigt und eine Verbindung zum wenigstens anteiligen Transport der Behälter (2) zum Anfang / Eingang des Auslaufförderbands (6a) herstellt.

14. Vorrichtung nach wenigstens einem der Ansprüche 10 bis 13, wobei die Reihenschieber (9, 10) zur beidseitig einreihigen Führung der Behälter (2) jeweils eine diesen in Pufferrichtung (PR) vorauslaufende vordere Reihenführung (9a, 10a) und eine den Behältern jeweils nachlaufende hintere Reihenführung (10a, 10b) umfassen.

15. Vorrichtung nach wenigstens einem der Ansprüche 10 bis 13, wobei die Reihenschieber (9, 10) paarweise an den Shuttles (7) angeordnet sind.

16. Behälterbehandlungsanlage, insbesondere Abfüllanlage (41, 51), mit der Vorrichtung (1) nach einem der Ansprüche 10 bis 15, ferner umfassend eine an wenigstens zwei der Verzweigungsförderbänder (13, 14) angeschlossene Etikettiermaschine, Inspektionsmaschine und/oder weitere Puffervorrichtung (54) für die mittels der Verzweigungsförderbänder ausgespeicherten und eingespeicherten Behälter (2).

17. Behälterbehandlungsanlage, insbesondere Abfüllanlage, nach Anspruch 16, ferner mit einer dem Einlaufförderband (5a) vorgeschalteten Behandlungsmaschine (32, 42, 52) für die Behälter (2), wobei die Behandlungsmaschine eine Blasmaschine, Füll-/Verschließmaschine, Etikettiermaschine oder eine Kombination aus Blasmaschine, Etikettiermaschine, Füllmaschine und Verschließmaschine ist, und mit einer dem Auslaufförderband (6a) nachgeschalteten Verpackungsmaschine und/oder Speichereinheit für die Behälter.

18. Behälterbehandlungsanlage, insbesondere Abfüllanlage (81), mit der Vorrichtung (1) nach einem der Ansprüche 10 bis 15, ferner umfassend einen an wenigstens einem der Verzweigungsförderbänder (13, 14) angeschlossenen und/oder von den Verzweigungsförderbändern gebildeten Restbehälterbahnhof (82) zur Aufnahme stromabwärts der Vorrichtung überschüssiger Behälter (2).

## Claims

1. A method for buffering containers (2) in a filling plant (31, 41, 51, 61, 71), wherein containers grouped in a single row are charged onto least one inlet conveyor belt (5a), are shifted in a single row on a buffer surface (3) adjoining transversely thereto by railguided and individually driven shuttles (7) with row pushers (9, 10) in a buffering direction (PR) extending transversely to the inlet direction (ER), and are discharged onto at least one outlet conveyor belt (6a) adjoining transversely thereto in the buffering direction, **characterized in that,** furthermore, containers (2) are discharged from the buffer surface and/or charged onto the buffer surface by means of branching conveyor belts (13, 14) integrated into the buffer surface transversely to the buffering direction and independently of the inlet conveyor belt and the outlet conveyor belt.

2. The method the according to claim 1, wherein the containers (2) charged from at least one of the branching conveyor belts (14) on the one hand and the containers charged from the inlet conveyor belt (5a) on the other hand are treated, inspected and/or charged in differing ways and/or separately from one another directly upstream.

3. The method according to claims 1 or 2, wherein the containers (2) discharged from at least one of the branching conveyor belts (13) on the one hand and the containers discharged from the outlet conveyor belt (6a) on the other hand are treated, inspected and/or charged in differing ways and/or separately from one another immediately downstream.

4. The method according to anyone of the preceding claims, wherein the containers (2) are discharged and charged by means of at least two of the branching conveyor belts (13, 14) immediately before and/or after labelling, inspection or buffering.

5. The method according to anyone of the preceding claims, wherein first containers (2) with a first product and/or of a first container format are transported on the buffer surface (3) and second containers (2') with a second product and/or of a second container format are discharged from a secondary buffer device (54) by means of at least one of the branching conveyor belts (14) and are charged into the row pushers (9, 10), and wherein the first and second containers are advanced to the outlet area (6) as a mixed sequence, in particular in row pushers loaded with either the first or the second containers, and are guided there in particular into transport lanes (6b) assigned to either the first or the second containers, thereby producing mixed container formats, i.e. so-called variety packs

6. The method according to anyone of the preceding claims, wherein during a product changeover/format changeover at a downstream location, surplus containers (2) of the old production are fed out onto a residual container station (82) by means of at least one of the branching conveyor belts (13, 14), in particular with a seamlessly continuous inflow of containers (2', 2) of the old and the new production.

7. The method according to at least one of the preceding claims, wherein during discharging, emptied shuttles (7) are moved away/lifted off from the buffer surface (3) at at least one of the branch conveyors (13) by means of a switchable vertical diverter (19) and are subsequently temporarily stored.

8. The method according to at least one of the preceding claims, wherein during charging at at least one of the branching conveyor belts (14), shuttles (7) to be loaded are driven/ lowered onto the buffer surface (3) by means of a switchable vertical diverter (19) after being temporarily stored.

9. The method according to at least one of the preceding claims, wherein the row pushers (9, 10) receive the container groups in a single row and each on both sides between front row guides and rear row guides (9a, 10a, 9b, 10b) leading and trailing, respectively, in the buffering direction.

10. An apparatus (1) for pressureless buffering of containers (2) grouped in single rows in a filling plant, comprising a buffer surface (3) and a transport system (4) arranged thereabove for moving the containers on the buffer surface in a buffering direction (PR) from an inlet area (5) having at least one inlet conveyor belt (5a) running transversely to the buffering direction (PR) into an outlet area (6) having an outlet conveyor belt (6a) running transversely to the buffering direction, wherein the transport system comprises shuttles (7) guided on rails (8) and driven independently of one another, having row pushers (9, 10) aligned transversely to the buffering direction for moving the containers grouped in single rows, **characterized by** branching conveyor belts (13, 14) integrated into the buffer surface running transversely to the buffering direction and driven independently of the inlet conveyor belt and of the outlet conveyor belt in order to discharge containers in a single row from the buffer surface and/or to charge containers in a single row onto the same.

11. The apparatus according to claim 10, wherein the transport system (4) further comprises a buffer (18) for empty shuttles and a switchable vertical diverter (19), each arranged in particular above the buffer surface (3), by means of which shuttles (7), emptied during discharging at least at one of the branching conveyor belts (13), can be guided from the buffer surface into the buffer for empty shuttles for intermediate storage.

12. The apparatus according to claims 10 or 11, wherein the transport system (4) further comprises a buffer (18) for empty shuttles and a switchable vertical diverter (19), each arranged in particular above the buffer surface (3), by means of which shuttles (7) to be loaded during charging at at least one of the branching conveyor belts (14) can be guided from the buffer for empty shuttles onto the buffer surface.

13. The apparatus according to at least one of claims 10 to 12, further comprising a bypass conveyor belt (34) which branches off by means of a horizontal diverter (35) at the start/inlet of the inlet conveyor belt (5a) and establishes a connection for at least proportional transport of the containers (2) to the start/inlet of the outlet conveyor belt (6a).

14. The apparatus according to at least one of claims 10 to 13, wherein the row pushers (9, 10), for guiding the containers (2) in a single row on both sides, each comprise a front row guide (9a, 10a) and a rear row guide (10a, 10b) each leading in the buffering direction (PR) and trailing the containers, respectively.

15. The apparatus according to at least one of claims 10 to 13, wherein the row pushers (9, 10) are arranged in pairs on the shuttles (7).

16. A container treatment plant, in particular a filling plant (41, 51), comprising the apparatus (1) according to anyone of claims 10 to 15, further comprising a labelling machine, and inspection machine and/or a further buffer device (54) connected to at least two of the branching conveyor belts (13, 14) for the containers (2) discharged and charged by means of the branching conveyor belts.

17. The container treatment plant, in particular a filling plant, according to claim 16, further comprising a treatment machine (32, 42, 52) for the containers (2) upstream of the inlet conveyor belt (5a), wherein the treatment machine is a blow molding machine, a filling/capping machine, a labelling machine or a combination of a blow molding machine, a labelling machine, a filling machine and a capping machine, and comprising a packaging machine and/or storage unit for the containers downstream of the outlet conveyor belt (6a).

18. The container treatment plant, in particular a filling plant (81), comprising the apparatus (1) according to anyone of claims 10 to 15, further comprising a remaining container station (82) connected to at least one of the branching conveyors (13, 14) and/or formed by the branching conveyors, for receiving surplus containers (2) downstream of the apparatus.

## Revendications

1. Procédé de mise en stock tampon de récipients (2) dans une installation de remplissage (31, 41, 51, 61, 71), dans lequel des récipients sont stockés de manière groupée en une rangée sur au moins une bande transporteuse d'entrée (5a), puis sont déplacés, en une rangée dans une direction de mise en stock tampon (PR) s'étendant transversalement par rapport à la direction d'entrée (ER) et sur une surface de mise en stock tampon (3) se raccordant transversalement à ladite bande transporteuse d'entrée, par des navettes (7) guidées par rail, entraînées individuellement et présentant des pousseurs séquentiels (9, 10), et sont stockés sur au moins une bande transporteuse de sortie (6a) se raccordant transversalement à ladite surface de mise en stock tampon dans la direction de mise en stock tampon**, caractérisé en ce que** des récipients (2) sont en outre retirés de la surface de mise en stock tampon et/ou stockés sur la surface de mise en stock tampon, transversalement par rapport à la direction de mise en stock tampon et indépendamment de la bande transporteuse d'entrée et de la bande transporteuse de sortie, au moyen de bandes transporteuses d'embranchement (13, 14) intégrées dans la surface de mise en stock tampon.

2. Procédé selon la revendication 1, dans lequel les récipients (2) stockés par au moins une des bandes transporteuses d'embranchement (14) d'une part et les récipients stockés par la bande transporteuse d'entrée (5a) d'autre part sont traités, inspectés et/ou stockés immédiatement en amont de manière différente les uns des autres et/ou de manière séparée les uns des autres.

3. Procédé selon la revendication 1 ou 2, dans lequel les récipients (2) retirés par au moins une des bandes transporteuses d'embranchement (13) d'une part et les récipients retirés par la bande transporteuse de sortie (6a) d'autre part sont traités, inspectés et/ou stockés immédiatement en aval de manière différente les uns des autres et/ou de manière séparée les uns des autres.

4. Procédé selon l'une quelconque des revendications précédentes, dans lequel les récipients (2) sont retirés et stockés au moyen d'au moins deux des bandes transporteuses d'embranchement (13, 14) immédiatement avant et/ou après un étiquetage, une inspection ou une mise en mise en stock tampon.

5. Procédé selon l'une quelconque des revendications précédentes, dans lequel des premiers récipients (2) avec un premier produit de remplissage et/ou présentant un premier format de récipients sont transportés sur la surface de mise en stock tampon (3) et des deuxièmes récipients (2') avec un deuxième produit de remplissage et/ou présentant un deuxième format de récipients sont retirés d'un dispositif de mise en stock tampon (54) subordonné au moyen d'au moins une des bandes transporteuses d'embranchement (14) et sont stockés dans les pousseurs séquentiels (9, 10), et dans lequel les premiers et deuxièmes récipients sont poussés en avant vers la région de sortie (6) sous forme de série mixte, en particulier dans des pousseurs séquentiels chargés avec soit les premiers récipients soit les deuxièmes récipients, et, au niveau de ladite région de sortie, sont en particulier dirigés dans des voies de transport (6b) associées soit aux premiers récipients soit aux deuxièmes récipients, et des formats de récipients mixtes appelés lots mixtes sont ainsi créés.

6. Procédé selon l'une quelconque des revendications précédentes, dans lequel, lors d'un changement de produit/de format, des récipients (2) excédentaires de production ancienne sont évacués en aval vers une gare de récipients résiduels (82) au moyen d'au moins une des bandes transporteuses d'embranchement (13, 14), en particulier en un flux continu de récipients (2', 2) de production ancienne et nouvelle.

7. Procédé selon au moins l'une quelconque des revendications précédentes, dans lequel, lors d'un retrait, des navettes (7) vidées au niveau d'au moins une des bandes transporteuses d'embranchement (13) sont déplacées/soulevées de la surface de mise en stock tampon (3) au moyen d'un aiguillage vertical commutable (19), puis stockées temporairement.

8. Procédé selon au moins l'une quelconque des revendications précédentes, dans lequel, lors d'un stockage, des navettes (7) à charger au niveau d'au moins une des bandes transporteuses d'embranchement (14) sont, après stockage temporaire, déplacées/abaissées sur la surface de mise en stock tampon (3) au moyen d'un aiguillage vertical commutable (19).

9. Procédé selon au moins l'une quelconque des revendications précédentes, dans lequel les pousseurs séquentiels (9, 10) accueillent les groupes de récipients en une seule rangée et respectivement des deux côtés entre des guides séquentiels (9a, 10a, 9b, 10b) avants les précédant et arrières les suivant dans la direction de mise en stock tampon.

10. Dispositif (1) permettant de mettre en stock tampon sans pression dynamique des récipients (2) groupés en une rangée au sein d'une installation de remplissage, comprenant une surface de mise en stock tampon (3) et un système de transport (4) agencé au-dessus et permettant de déplacer les récipients sur la surface de mise en stock tampon dans une direction de mise en stock tampon (PR) depuis une région d'entrée (5) présentant au moins une bande transporteuse d'entrée (5a) s'étendant transversalement par rapport à la direction de mise en stock tampon (PR) jusqu'à une région de sortie (6) présentant une bande transporteuse de sortie (6a) s'étendant transversalement par rapport à la direction de mise en stock tampon, dans lequel le système de transport comprend des navettes (7) guidées sur des rails (8) et entraînées indépendamment les unes des autres, qui présentent des pousseurs séquentiels (9, 10) orientés transversalement par rapport à la direction de mise en stock tampon et permettant de déplacer les récipients de manière groupée en une rangée, **caractérisé par** des bandes transporteuses d'embranchement (13, 14) intégrées dans la surface de mise en stock tampon et s'étendant transversalement par rapport à la direction de mise en stock tampon et entraînées indépendamment de la bande transporteuse d'entrée et de la bande transporteuse de sortie, afin de retirer des récipients de la surface de mise en stock tampon en une rangée et/ou de les stocker sur ladite surface de mise en stock tampon en une rangée.

11. Dispositif selon la revendication 10, dans lequel le système de transport (4) comprend en outre un stock tampon de navettes vides (18) et un aiguillage vertical commutable (19), en particulier respectivement agencés au-dessus de la surface de mise en stock tampon (3), grâce auxquels, lors d'un retrait, des navettes (7) vidées au niveau d'au moins une des bandes transporteuses d'embranchement (13) peuvent être dirigées de la surface de mise en stock tampon jusque dans le stock tampon de navettes vides en vue d'un stockage intermédiaire.

12. Dispositif selon la revendication 10 ou 11, dans lequel le système de transport (4) comprend en outre un stock tampon de navettes vides (18) et un aiguillage vertical commutable (19), en particulier respectivement agencés au-dessus de la surface de mise en stock tampon (3), grâce auxquels, lors d'un stockage, des navettes (7) à charger au niveau d'au moins une des bandes transporteuses d'embranchement (13) peuvent être dirigées du stock tampon de navettes vides jusque sur la surface de mise en stock tampon.

13. Dispositif selon au moins l'une quelconque des revendications 10 à 12, comprenant en outre une bande transporteuse de dérivation (34) qui se ramifie au moyen d'un aiguillage horizontal (35) au début/à l'entrée de la bande transporteuse d'entrée (5a) et établit une connexion en vue d'un transport au moins proportionnel des récipients (2) au début/à l'entrée de la bande transporteuse de sortie (6a).

14. Dispositif selon au moins l'une quelconque des revendications 10 à 13, dans lequel les pousseurs séquentiels (9, 10) comprennent respectivement un guide séquentiel avant (9a, 10a) les précédant dans la direction de mise en stock tampon (PR) et un guide séquentiel arrière (10a, 10b) suivant respectivement les récipients, en vue d'un guidage des récipients (2) en une rangée et des deux côtés.

15. Dispositif selon au moins l'une quelconque des revendications 10 à 13, dans lequel les pousseurs séquentiels (9, 10) sont agencés par paires au niveau des navettes (7).

16. Installation de traitement de récipients, en particulier installation de remplissage (41, 51), comprenant le dispositif (1) selon l'une quelconque des revendications 10 à 15, comprenant en outre une machine d'étiquetage, une machine d'inspection et/ou un autre dispositif de mise en stock tampon (54) raccordé(s) à au moins deux des bandes transporteuses d'embranchement (13, 14) et destiné(s) aux récipients (2) retirés et stockés au moyen des bandes transporteuses d'embranchement.

17. Installation de traitement de récipients, en particulier installation de remplissage, selon la revendication 16, comprenant en outre une machine de traitement (32, 42, 52) destinée aux récipients (2) et placée en amont de la bande transporteuse d'entrée (5a), dans laquelle la machine de traitement est une machine de soufflage, une machine de remplissage/fermeture, une étiqueteuse ou une combinaison d'une machine de soufflage, d'une machine d'étiquetage, d'une machine de remplissage et d'une machine de fermeture, et comprenant une machine d'emballage et/ou une unité de stockage destinée(s) aux récipients et placée(s) en aval de la bande transporteuse de sortie (6a).

18. Installation de traitement de récipients, en particulier installation de remplissage (81), comprenant le dispositif (1) selon l'une quelconque des revendications 10 à 15, comprenant en outre une gare de récipients résiduels (82) raccordée à au moins une des bandes transporteuses d'embranchement (13, 14) et/ou formée par les bandes transporteuses d'embranchement et permettant d'accueillir les récipients excédentaires (2) en aval du dispositif.
